# EUROPEAN PATENT SPECIFICATION

(11) **EP 3 358 772 B1**
(45) Date of publication and mention of the grant of the patent: **06.11.2019**
(21) Application number: 16858857.2
(22) Date of filing: 14.09.2016
(51) Int. Cl.: H04L 1/18, H04W 72/04, H04W 72/12, H04W 88/08, H04L 1/00

(54) **DATA PROCESSING METHOD, BASE STATION, AND USER EQUIPMENT**
DATENVERARBEITUNGSVERFAHREN, BASISSTATION UND BENUTZERGERÄT
PROCÉDÉ DE TRAITEMENT DE DONNÉES, STATION DE BASE ET ÉQUIPEMENT D'UTILISATEUR

(30) Priority: 26.10.2015 CN 201510700640
(43) Date of publication of application: 08.08.2018
(73) Proprietor: Huawei Technologies Co., Ltd., Longgang District Shenzhen, Guangdong 518129 (CN)
(72) Inventor: ZHANG, Zhenhua, Shenzhen Guangdong 518129 (CN); HU, Yushu, Shenzhen Guangdong 518129 (CN); SHEN, Lei, Shenzhen Guangdong 518129 (CN)
(74) Representative: Isarpatent
(86) International application number: PCT/CN2016/099114
(87) International publication number: WO 2017/071421

(56) References cited:
- WO-A1-2014/171754
- WO-A1-2015/113287
- CN-A- 101 651 528
- CN-A- 104 919 888
- CN-A- 105 262 570

## Description

### TECHNICAL FIELD

The present invention relates to the field of communications technologies, and in particular, to a data processing method, a base station, and user equipment.

### BACKGROUND

A Long Term Evolution (LTE) network is rapidly developing from independent stations to mutually cooperative stations. Common technologies are two-cell joint transmission (JT), a single frequency network (SFN), dynamic point selection (DPS), carrier aggregation (CA), coordinated scheduling-based power control (CSPC), and the like.

An important basis of inter-station cooperation is interconnection between stations. Currently, frequently-used methods are fiber interconnection and ordinary Internet Protocol (IP) network interconnection. An advantage of fiber interconnection is a small delay (for example, the delay may be less than 100 nanoseconds). However, project costs of fiber interconnection are high, and an operator who has not laid a fiber in advance needs to lay a new fiber. An advantage of IP interconnection is low costs, and an existing transmission network may be used without being particularly reconstructed. However, a data transmission delay is large, and there is generally a delay of 2 to 8 milliseconds. When the delay is excessively large, a hybrid automatic repeat request (HARQ) feedback is not provided in a timely manner, and this causes a problem that a HARQ multiplexing gain cannot be obtained.

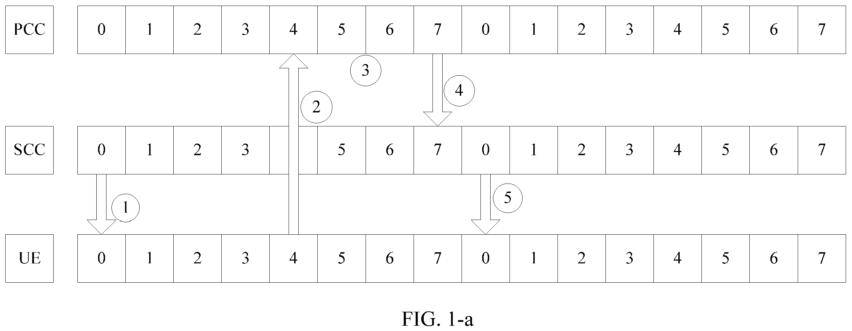

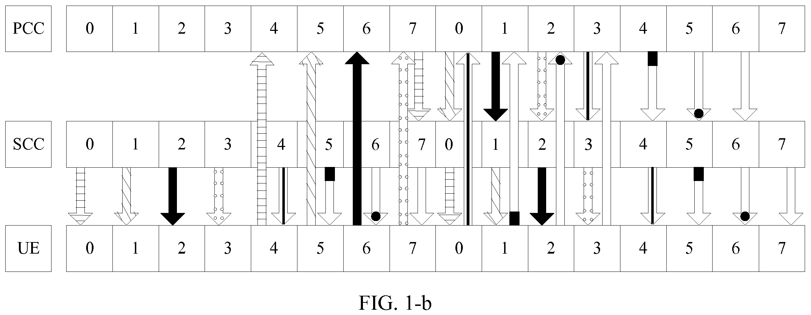

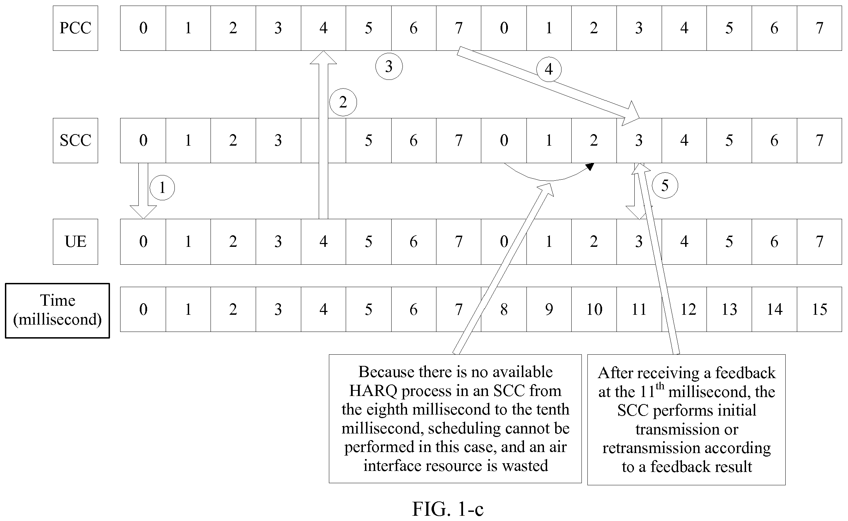

If an inter-station transmission delay is not taken into consideration, a processing procedure of one HARQ process is shown in FIG. 1-a. FIG. 1-a is a schematic diagram of a processing procedure of one HARQ process when an inter-station transmission delay is not taken into consideration in the prior art. The processing procedure may mainly include the following steps:
Step 1: A secondary carrier cell (English full name: Secondary Carrier Cell, English abbreviation: SCC) delivers downlink authorization to user equipment (English full name: User Equipment, English abbreviation: UE), where the authorization is downlink authorization of a HARQ process 0. After receiving the authorization, the UE demodulates corresponding data at a frequency domain location in the authorization, and performs cyclic redundancy check (English full name: Cyclic Redundancy Check, English abbreviation: CRC) processing, so as to obtain a check result.
Step 2: At the fourth millisecond after the UE receives the downlink authorization, the UE needs to feed back, to a base station, a receiving result of the downlink authorization of the HARQ process 0 corresponding to a moment 0.
Step 3: The base station receives a feedback of the HARQ process 0 by using a primary carrier cell (English full name: Primary Carrier Cell, English abbreviation: PCC), and performs demodulation processing.
Step 4: Because the inter-station transmission delay is not taken into consideration, after the base station completes demodulation, the base station sends the feedback of the HARQ process 0 to the SCC at a same moment by using the PCC. For example, the base station completes demodulation at a moment 7, and the base station sends the feedback of the HARQ process 0 to the SCC at the moment 7.
Step 5: At a moment of new downlink scheduling, the SCC finds that the HARQ process 0 is available, and continues to use the HARQ process 0 to complete downlink authorization.

The foregoing procedure is applied to all eight HARQ processes in ideal backhaul. As shown in FIG. 1-b, FIG. 1-b is a schematic diagram of a processing procedure of eight HARQ processes when an inter-station transmission delay is not taken into consideration in the prior art. Different arrow symbols represent different HARQ processes. It may be learned from FIG. 1-b that, if there is no inter-station transmission delay, a feedback of each HARQ process can be sent to the SCC in a timely manner, and each millisecond can be scheduled and each HARQ process can have a multiplexing gain on the SCC side.

The inventor of the present invention has found, in a process of implementing the present invention, that the prior art can only be applied to a case in which there is no inter-station transmission delay, however, in an actual application scenario, there is generally an inter-station transmission delay. If the inter-station transmission delay is not ideal, for example, is four milliseconds, a processing procedure is shown in FIG. 1-c. FIG. 1-c is a schematic diagram of a processing procedure of eight HARQ processes when an inter-station transmission delay is taken into consideration in the prior art. The processing procedure may mainly include the following steps:
First three steps are similar to step 1, step 2, and step 3 shown in FIG. 1-a.

Step 4: Because the inter-station transmission delay is four milliseconds, there is a delay of four milliseconds in feeding back information to the SCC, and because there is no available HARQ process at the eighth millisecond, the ninth millisecond, and the tenth millisecond, scheduling cannot be performed in the SCC. Therefore, in an existing technical solution, as the inter-station transmission delay increases, waiting time of the HARQ process becomes longer, time in which a user cannot be scheduled becomes longer, and this causes a waste of an air interface resource.

The following prior art document discloses further technological background information for the present invention:
D1 WO 2015/113287 A1 (HUAWEI TECH CO LTD [CN]) 6 August 2015 (2015-08-06) English family member EP 3 094 130 A1 (HUAWEI TECH CO LTD [CN]) 16 November 2016 (2016-11-16)

Document D1 discloses a data scheduling method, comprising sending, by a first base station, first downlink authorization and first downlink data to a mobile device at a first transmission time interval TTI by using a first hybrid automatic repeat request HARQ process, wherein the first downlink data carries a first new data indicator NDI in a first state, sending, by the first base station, second downlink authorization and second downlink data to the mobile device at a second TTI by using a second HARQ process, wherein the second downlink data carries a second NDI in a second state, sending, by the first base station, third downlink authorization and third downlink data to the mobile device at a third TTI by using the first HARQ process, wherein the third downlink data carries the first NDI in a third state, and the third state is obtained by inverting the first state of the first NDI, and receiving, by the first base station at a fourth TTI, a second feedback result that is sent by a second base station and that is corresponding to the second downlink data, and sending, by the first base station at the fourth TTI by using the second HARQ process, fourth downlink authorization and the retransmitted second downlink data to the mobile device according to negative acknowledgement NACK information comprised in the second feedback result, wherein the retransmitted second downlink data carries the second NDI in the second state, and there is an inter-station transmission delay between the second base station and the first base station.

### SUMMARY

The object of the present invention is to provide a data scheduling method and a base station which avoid, as the inter-station transmission delay increases, that waiting time of the HARQ process becomes longer, time in which a user cannot be scheduled becomes longer, and that this causes a waste of an air interface resource. This object is solved by a data scheduling method of claim 1 and a base station of claim 5. Further advantageous embodiments and improvements of the present invention are listed in the dependent claims. Hereinafter, before coming to a detailed description of the embodiments of the invention with reference to the drawings, first some aspects of the invention are described which serve further understanding of the invention.

In this respect aspects of the present invention provide a data processing method, a base station, and user equipment, providing the advantage that when there is an inter-station transmission delay between base stations, both full scheduling of UE and a multiplexing gain of a HARQ process can be implemented.

To resolve the foregoing technical problem, aspects of the present invention provide the following technical features:
According to a first aspect, the present invention provides a data scheduling method, including:
sending, by a first base station, first downlink authorization and first downlink data to user equipment UE at a first transmission time interval TTI by using a first hybrid automatic repeat request HARQ process, where the first downlink data carries a first new data indicator NDI in a first state;
sending, by the first base station, second downlink authorization and second downlink data to the UE at a second TTI by using a second HARQ process, where the second downlink data carries a second NDI in a second state;
sending, by the first base station, third downlink authorization and third downlink data to the UE at a third TTI by using the first HARQ process, where the third downlink data carries the first NDI in a third state, and the third state is obtained by inverting the first state of the first NDI; and receiving, by the first base station at a fourth TTI, a second feedback result that is sent by a second base station and that is corresponding to the second downlink data, and sending, by the first base station at the fourth TTI by using the second HARQ process, fourth downlink authorization and the retransmitted second downlink data to the UE according to negative acknowledgement NACK information included in the second feedback result, where the retransmitted second downlink data carries the second NDI in the second state, and there is an inter-station transmission delay between the second base station and the first base station.

With reference to the first aspect, in a first possible implementation of the first aspect, the method further includes:
receiving, by the first base station at a fifth TTI, a first feedback result that is sent by the second base station and that is corresponding to the first downlink data, and sending, by the first base station at the fifth TTI by using the first HARQ process, fifth downlink authorization and the retransmitted first downlink data to the UE according to NACK information included in the first feedback result, where the retransmitted first downlink data carries the first NDI in the first state, the first state is obtained by inverting the third state of the first NDI, and a time difference between the fourth TTI and the second TTI is equal to a time difference between the fifth TTI and the first TTI.

With reference to the first aspect, in a second possible implementation of the first aspect, after the sending, by the first base station, third downlink authorization and third downlink data to the UE at a third TTI by using the first HARQ process, the method further includes:
sending, by the first base station, sixth downlink authorization and fourth downlink data to the UE at a sixth TTI by using the first HARQ process, where the fourth downlink data carries the first NDI in the first state, and the first state is obtained by inverting the third state of the first NDI.

With reference to the first aspect, or the first or the second possible implementation of the first aspect, in a third possible implementation of the first aspect, the sending, by the first base station, third downlink authorization and third downlink data to the UE at a third TTI by using the first HARQ process includes:
if the first base station determines, at the third TTI, that there is no available HARQ process, sending, by the first base station, the third downlink authorization and the third downlink data to the UE at the third TTI by using a virtual HARQ process, where the virtual HARQ process is corresponding to the first HARQ process.

With reference to the first aspect, or the first or the second possible implementation of the first aspect, in a fourth possible implementation of the first aspect, after the receiving, by the first base station at a fourth TTI, a second feedback result that is sent by a second base station and that is corresponding to the second downlink data, the method further includes:
sending, by the first base station at the fourth TTI by using the second HARQ process, the fourth downlink authorization and fifth downlink data to the UE according to acknowledgement ACK information included in the second feedback result, where the fifth downlink data carries the second NDI in a fourth state, and the fourth state is obtained by inverting the second state of the second NDI.

According to a second aspect, the present invention further provides a data processing method, including:
receiving, by user equipment UE at a first transmission time interval TTI by using a first hybrid automatic repeat request HARQ process, first downlink authorization sent by a first base station, demodulating, according to the first downlink authorization, first downlink data sent by the first base station, and sending, to a second base station, a first feedback result corresponding to the first downlink data, where there is an inter-station transmission delay between the second base station and the first base station, and the first downlink data carries a first new data indicator NDI in a first state;
receiving, by the UE at a second TTI by using a second HARQ process, second downlink authorization sent by the first base station, demodulating, according to the second downlink authorization, second downlink data sent by the first base station, and sending, to the second base station, a second feedback result corresponding to the second downlink data, where the second downlink data carries a second NDI in a second state;
receiving, by the UE at a third TTI by using the first HARQ process, third downlink authorization sent by the first base station, demodulating, according to the third downlink authorization, third downlink data sent by the first base station, and sending, to the second base station, a third feedback result corresponding to the third downlink data, where the third downlink data carries the first NDI in a third state; and
receiving, by the UE at a fourth TTI by using the second HARQ process, fourth downlink authorization sent by the first base station, demodulating, according to the fourth downlink authorization, the retransmitted second downlink data sent by the first base station, and sending, to the second base station, a fourth feedback result corresponding to the retransmitted second downlink data, where the retransmitted second downlink data carries the second NDI in the second state.

With reference to the second aspect, in a first possible implementation of the second aspect, the method further includes:
receiving, by the UE at a fifth TTI by using the first HARQ process, fifth downlink authorization sent by the first base station, and demodulating,
according to the fifth downlink authorization, the retransmitted first downlink data sent by the first base station, where the retransmitted first downlink data carries the first NDI in the first state.

With reference to the second aspect, in a second possible implementation of the second aspect, before the receiving, by the UE at a fourth TTI by using the second HARQ process, fourth downlink authorization sent by the first base station, the method further includes:
receiving, by the UE at a sixth TTI by using the first HARQ process, sixth downlink authorization sent by the first base station, and demodulating,
according to the sixth downlink authorization, fourth downlink data sent by the first base station, where the fourth downlink data carries the first NDI in the first state.

With reference to the second aspect, or the first or the second possible implementation of the second aspect, in a third possible implementation of the second aspect, the receiving, by the UE at a third TTI by using the first HARQ process, third downlink authorization sent by the first base station includes:
receiving, by the UE at the third TTI by using a virtual HARQ process, the third downlink authorization sent by the first base station, where the virtual HARQ process is corresponding to the first HARQ process.

With reference to the second aspect, or the first or the second possible implementation of the second aspect, in a fourth possible implementation of the second aspect, after the receiving, by the UE at a fourth TTI by using the second HARQ process, fourth downlink authorization sent by the first base station, the method further includes:
demodulating, by the UE according to the fourth downlink authorization, fifth downlink data sent by the first base station, where the fifth downlink data carries the second NDI in a fourth state.

With reference to the second aspect, or the first or the second possible implementation of the second aspect, in a fifth possible implementation of the second aspect, the demodulating, according to the third downlink authorization, third downlink data sent by the first base station includes:
receiving, by the UE, the third downlink data according to an air interface resource indicated by the third downlink authorization; and
clearing, by the UE according to the first NDI that is carried in the third downlink data and that is in the third state, the first downlink data stored in a cache corresponding to the first HARQ process, and writing the third downlink data into the cache corresponding to the first HARQ process.

With reference to the second aspect, or the first or the second possible implementation of the second aspect, in a sixth possible implementation of the second aspect, the demodulating, according to the fourth downlink authorization, the retransmitted second downlink data sent by the first base station includes:
receiving, by the UE, the retransmitted second downlink data according to an air interface resource indicated by the fourth downlink authorization; and
combining, by the UE according to the second NDI that is carried in the retransmitted second downlink data and that is in the second state, the second downlink data stored in a cache corresponding to the second HARQ process with the retransmitted second downlink data, and writing a combination result into a cache corresponding to the second HARQ process.

According to a third aspect, the present invention further provides a base station, where the base station is specifically a first base station, and the first base station includes:
a first data processing module, configured to send first downlink authorization and first downlink data to user equipment UE at a first transmission time interval TTI by using a first hybrid automatic repeat request HARQ process, where the first downlink data carries a first new data indicator NDI in a first state;
a second data processing module, configured to send second downlink authorization and second downlink data to the UE at a second TTI by using a second HARQ process, where the second downlink data carries a second NDI in a second state;
a third data processing module, configured to send third downlink authorization and third downlink data to the UE at a third TTI by using the first HARQ process, where the third downlink data carries the first NDI in a third state, and the third state is obtained by inverting the first state of the first NDI; and
a fourth data processing module, configured to: receive, at a fourth TTI, a second feedback result that is sent by a second base station and that is corresponding to the second downlink data, and send, at the fourth TTI by using the second HARQ process, fourth downlink authorization and the retransmitted second downlink data to the UE according to negative acknowledgement NACK information included in the second feedback result, where the retransmitted second downlink data carries the second NDI in the second state, and there is an inter-station transmission delay between the second base station and the first base station.

With reference to the third aspect, in a first possible implementation of the third aspect, the first base station further includes:
a fifth data processing module, configured to: receive, at a fifth TTI, a first feedback result that is sent by the second base station and that is corresponding to the first downlink data, and send, at the fifth TTI by using the first HARQ process, fifth downlink authorization and the retransmitted first downlink data to the UE according to NACK information included in the first feedback result, where the retransmitted first downlink data carries the first NDI in the first state, the first state is obtained by inverting the third state of the first NDI, and a time difference between the fourth TTI and the second TTI is equal to a time difference between the fifth TTI and the first TTI.

With reference to the third aspect, in a second possible implementation of the third aspect, the first base station further includes:
a sixth data processing module, configured to: after the third data processing module sends the third downlink authorization and the third downlink data to the UE at the third TTI by using the first HARQ process, send sixth downlink authorization and fourth downlink data to the UE at a sixth TTI by using the first HARQ process, where the fourth downlink data carries the first NDI in the first state, and the first state is obtained by inverting the third state of the first NDI.

With reference to the third aspect, or the first or the second possible implementation of the third aspect, in a third possible implementation of the third aspect, the third data processing module is specifically configured to: if the first base station determines, at the third TTI, that there is no available HARQ process, send the third downlink authorization and the third downlink data to the UE at the third TTI by using a virtual HARQ process, where the virtual HARQ process is corresponding to the first HARQ process.

With reference to the third aspect, or the first or the second possible implementation of the third aspect, in a fourth possible implementation of the third aspect, after receiving, at the fourth TTI, the second feedback result that is sent by the second base station and that is corresponding to the second downlink data, the fourth data processing module is further configured to send, at the fourth TTI by using the second HARQ process, the fourth downlink authorization and fifth downlink data to the UE according to acknowledgement ACK information included in the second feedback result, where the fifth downlink data carries the second NDI in a fourth state, and the fourth state is obtained by inverting the second state of the second NDI.

According to a fourth aspect, the present invention further provides user equipment, including:
a first data processing module, configured to: receive, at a first transmission time interval TTI by using a first hybrid automatic repeat request HARQ process, first downlink authorization sent by a first base station, demodulate, according to the first downlink authorization, first downlink data sent by the first base station, and send, to a second base station, a first feedback result corresponding to the first downlink data, where there is an inter-station transmission delay between the second base station and the first base station, and the first downlink data carries a first new data indicator NDI in a first state;
a second data processing module, configured to: receive, at a second TTI by using a second HARQ process, second downlink authorization sent by the first base station, demodulate, according to the second downlink authorization, second downlink data sent by the first base station, and send, to the second base station, a second feedback result corresponding to the second downlink data, where the second downlink data carries a second NDI in a second state;
a third data processing module, configured to: receive, at a third TTI by using the first HARQ process, third downlink authorization sent by the first base station, demodulate, according to the third downlink authorization, third downlink data sent by the first base station, and send, to the second base station, a third feedback result corresponding to the third downlink data, where the third downlink data carries the first NDI in a third state; and
a fourth data processing module, configured to: receive, at a fourth TTI by using the second HARQ process, fourth downlink authorization sent by the first base station, demodulate, according to the fourth downlink authorization, the retransmitted second downlink data sent by the first base station, and send, to the second base station, a fourth feedback result corresponding to the retransmitted second downlink data, where the retransmitted second downlink data carries the second NDI in the second state.

With reference to the fourth aspect, in a first possible implementation of the fourth aspect, the user equipment further includes:
a fifth data processing module, configured to: receive, at a fifth TTI by using the first HARQ process, fifth downlink authorization sent by the first base station, and demodulate, according to the fifth downlink authorization, the retransmitted first downlink data sent by the first base station, where the retransmitted first downlink data carries the first NDI in the first state.

With reference to the fourth aspect, in a second possible implementation of the fourth aspect, the user equipment further includes: a sixth data processing module, configured to: before the fourth data processing module receives, at the fourth TTI by using the second HARQ process, the fourth downlink authorization sent by the first base station, receive, at a sixth TTI by using the first HARQ process, sixth downlink authorization sent by the first base station, and demodulate, according to the sixth downlink authorization, fourth downlink data sent by the first base station, where the fourth downlink data carries the first NDI in the first state.

With reference to the fourth aspect, or the first or the second possible implementation of the fourth aspect, in a third possible implementation of the fourth aspect, the third data processing module is specifically configured to receive, at the third TTI by using a virtual HARQ process, the third downlink authorization sent by the first base station, and the virtual HARQ process is corresponding to the first HARQ process.

With reference to the fourth aspect, or the first or the second possible implementation of the fourth aspect, in a fourth possible implementation of the fourth aspect, the fourth data processing module is further configured to demodulate, according to the fourth downlink authorization, fifth downlink data sent by the first base station, where the fifth downlink data carries the second NDI in a fourth state.

With reference to the fourth aspect, or the first or the second possible implementation of the fourth aspect, in a fifth possible implementation of the fourth aspect, the third data processing module is specifically configured to: receive the third downlink data according to an air interface resource indicated by the third downlink authorization; and clear, according to the first NDI that is carried in the third downlink data and that is in the third state, the first downlink data stored in a cache corresponding to the first HARQ process, and write the third downlink data into the cache corresponding to the first HARQ process.

With reference to the fourth aspect, or the first or the second possible implementation of the fourth aspect, in a sixth possible implementation of the fourth aspect, the fourth data processing module is specifically configured to: receive the retransmitted second downlink data according to an air interface resource indicated by the fourth downlink authorization; and combine, according to the second NDI that is carried in the retransmitted second downlink data and that is in the second state, the second downlink data stored in a cache corresponding to the second HARQ process with the retransmitted second downlink data, and write a combination result into a cache corresponding to the second HARQ process.

It can be seen from the foregoing technical solutions that the aspects of the present invention have the following advantages:
In the aspects and examples of the present invention, the first base station sends the first downlink authorization and the first downlink data to the UE at the first TTI by using the first HARQ process, where the first downlink data carries the first NDI in the first state; the first base station sends the second downlink authorization and the second downlink data to the UE at the second TTI by using the second HARQ process, where the second downlink data carries the second NDI in the second state; the first base station sends the third downlink authorization and the third downlink data to the UE at the third TTI by using the first HARQ process, where the third downlink data carries the first NDI in the third state, and the third state is obtained by inverting the first state of the first NDI; and the first base station receives, at the fourth TTI, the second feedback result that is sent by the second base station and that is corresponding to the second downlink data, and the first base station sends, at the fourth TTI by using the second HARQ process, the fourth downlink authorization and the retransmitted second downlink data to the UE according to the negative acknowledgement NACK information included in the second feedback result, where the retransmitted second downlink data carries the second NDI in the second state, and the inter-station transmission delay between the second base station and the first base station is a time difference between the fourth TTI and the first TTI. In the aspects of the present invention, the first base station classifies HARQ processes into two types of processes: the first HARQ process and the second HARQ process. The first HARQ process may be used by the first base station to send the downlink data to the UE at the first TTI and the third TTI, so as to implement full scheduling of the UE, thereby improving utilization of the air interface resource. If there is the inter-station transmission delay between the first base station and the second base station, the first base station receives the second feedback result at the fourth TTI, and the first base station retransmits the second downlink data by using the second HARQ process. Because the status of the second NDI carried in the retransmitted second downlink data is not inverted (that is, the second NDI is still in the second state), the UE may jointly decode, according to the second NDI in the second state, the second downlink data sent by the first base station at the second TTI and the retransmitted second downlink data sent by the first base station at the fourth TTI, and therefore, the second HARQ process may implement the multiplexing gain of the HARQ process.

### BRIEF DESCRIPTION OF DRAWINGS

To describe the technical solutions in the prior art and the embodiments of the present invention more clearly, the following briefly describes the accompanying drawings required for describing the prior art and the embodiments. Apparently, the accompanying drawings in the following description show merely some embodiments of the present invention, and persons skilled in the art may still derive other drawings from these accompanying drawings.
FIG. 1-a is a schematic diagram of a processing procedure of one HARQ process when an inter-station transmission delay is not taken into consideration in the prior art;
FIG. 1-b is a schematic diagram of a processing procedure of eight HARQ processes when an inter-station transmission delay is not taken into consideration in the prior art;
FIG. 1-c is a schematic diagram of a processing procedure of eight HARQ processes when an inter-station transmission delay is taken into consideration in the prior art;
FIG. 2 is a schematic block diagram of a procedure of a data processing method according to an embodiment of the present invention;
FIG. 3 is a schematic block diagram of a procedure of another data processing method according to an embodiment of the present invention;
FIG. 4 is a schematic diagram of a processing procedure of one HARQ process when an inter-station transmission delay is taken into consideration according to an embodiment of the present invention;
FIG. 5-a is a schematic structural diagram of composition of a base station according to an embodiment of the present invention;

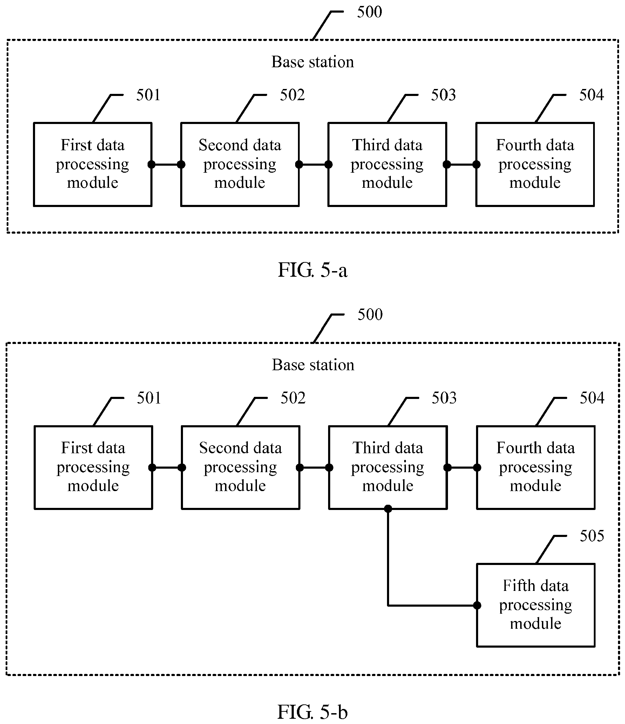

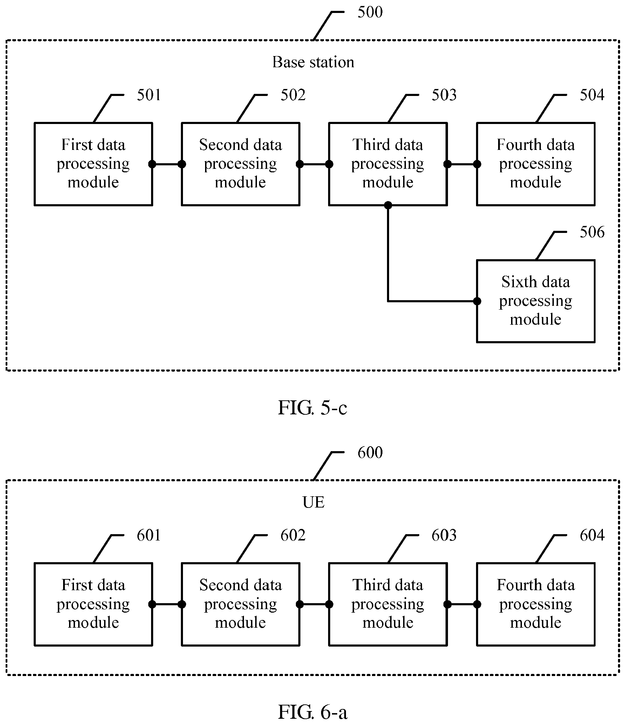

FIG. 5-b is a schematic structural diagram of composition of another base station according to an embodiment of the present invention;
FIG. 5-c is a schematic structural diagram of composition of another base station according to an embodiment of the present invention;

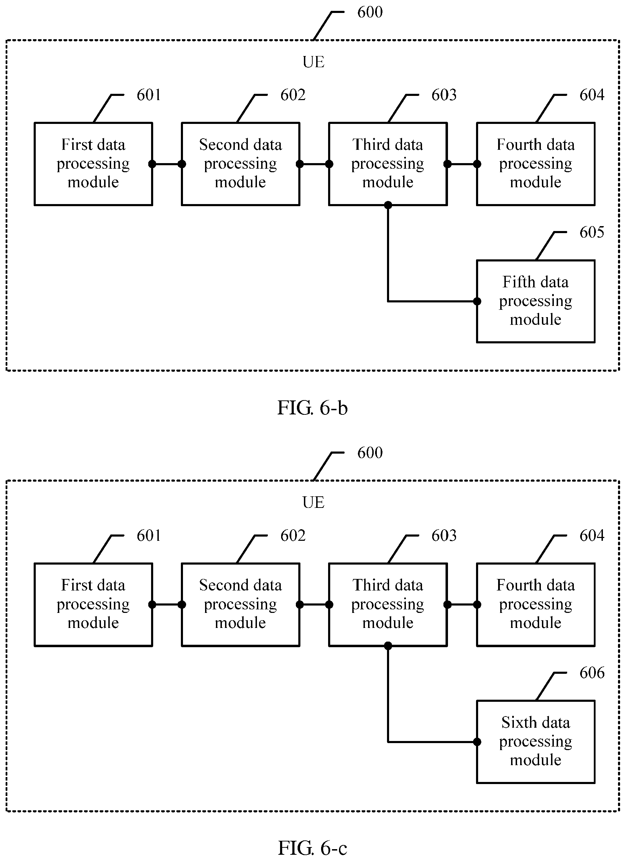

FIG. 6-a is a schematic structural diagram of composition of user equipment according to an embodiment of the present invention;
FIG. 6-b is a schematic structural diagram of composition of another user equipment according to an embodiment of the present invention;
FIG. 6-c is a schematic structural diagram of composition of another user equipment according to an embodiment of the present invention;

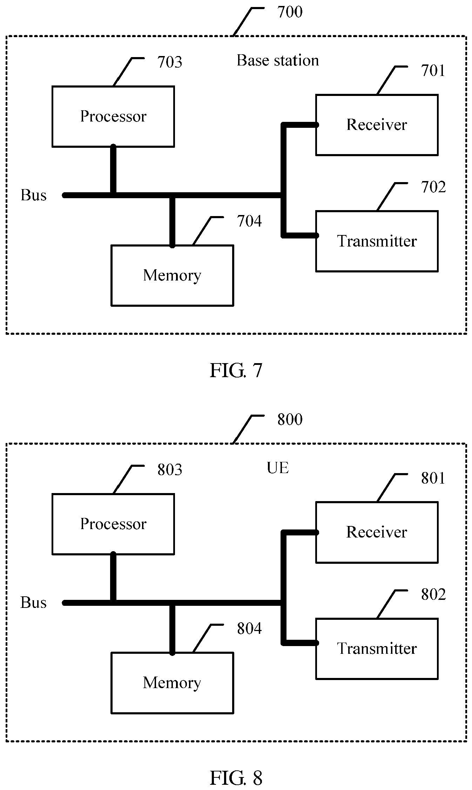

FIG. 7 is a schematic structural diagram of composition of another base station according to an embodiment of the present invention; and
FIG. 8 is a schematic structural diagram of composition of another user equipment according to an embodiment of the present invention.

### DESCRIPTION OF EMBODIMENTS

Embodiments of the present invention provide a data processing method and a base station so that when there is an inter-station transmission delay between base stations, both full scheduling of UE and a multiplexing gain of a HARQ process can be implemented.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention.

The scope of the invention is defined by the independent claims. Preferred embodiments are defined by the dependent claims.

In the following description, any embodiment(s) referred to and not falling within the scope of the appended claims, is (are) merely example(s) useful to the understanding of the invention.

In the specification, claims, and accompanying drawings of the present invention, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in the embodiments of the present invention. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Details are separately described below.

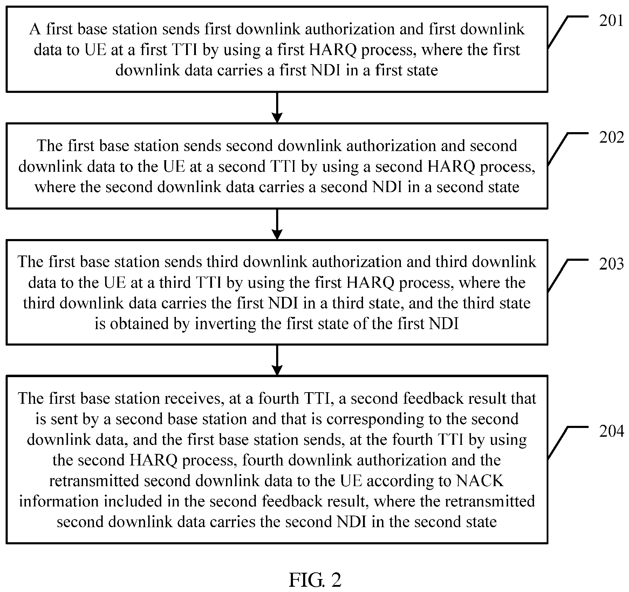

An embodiment of the present invention provides a data processing method, and the data processing method may be applied to a scenario in which a base station side sends data to UE by using a HARQ process. Referring to FIG. 2, the data processing method provided in this embodiment of the present invention may include the following steps.

201. A first base station sends first downlink authorization and first downlink data to UE at a first transmission time interval (English full name: Transmission Time Interval, English abbreviation: TTI) by using a first HARQ process, where the first downlink data carries a first new data indicator (English full name: New Data Indicator, English abbreviation: NDI) in a first state.

In this embodiment of the present invention, the first base station sends downlink authorization and downlink data to the UE at one TTI by using one HARQ process. To distinguish between different TTIs, the following different TTIs in this embodiment of the present invention are respectively defined as a first TTI, a second TTI, a third TTI, a fourth TTI, a fifth TTI, a sixth TTI, and the like. In addition, downlink authorization sent by the first base station at different TTIs is respectively defined as first downlink authorization, second downlink authorization, third downlink authorization, fourth downlink authorization, fifth downlink authorization, sixth downlink authorization, and the like. To distinguish between different downlink data, the following different downlink data in this embodiment of the present invention is respectively defined as first downlink data, second downlink data, third downlink data, fourth downlink data, and the like. Similarly, in this embodiment of the present invention, NDIs corresponding to different HARQ processes are respectively defined in different manners, for example, an NDI corresponding to the first HARQ process is defined as the first NDI, and an NDI corresponding to a second HARQ process is defined as a second NDI.

In this embodiment of the present invention, the first base station classifies HARQ processes into two types of processes: the first HARQ process and the second HARQ process. The first HARQ process is only used for initial transmission of the HARQ process when there are not enough HARQ processes, and is used to ensure full scheduling of the UE. The first HARQ process is also referred to as an ordinary HARQ process. Full scheduling means that the UE receives downlink authorization at each TTI, and therefore, the HARQ process may be used to implement full scheduling of the UE. The second HARQ process retains a HARQ multiplexing gain in any case, and the second HARQ process is also referred to as a multiplexing HARQ process. In this embodiment of the present invention, a combination of the two types of HARQ processes is used to implement full scheduling and obtain an effect of the HARQ multiplexing gain. For example, it is specified in a protocol that there are eight HARQ processes altogether, which are respectively a HARQ process 0, a HARQ process 1, a HARQ process 2, ..., and a HARQ process 7. The eight HARQ processes are classified into two types. The HARQ process 0 is the first HARQ process, and the HARQ processes 1 to 7 are second HARQ processes. The HARQ processes 1 to 7 wait for feedback information of initial transmission scheduling to determine whether retransmission is to be performed. In this case, when initial transmission fails in the HARQ processes 1 to 7, retransmission may be implemented, and therefore, there is a retransmission gain in the second HARQ processes 1 to 7. Because there is a time difference that is caused by an inter-station transmission delay and that is in sending a feedback by one station to another station in the HARQ processes 1 to 7, the UE has no available scheduling resource in a period, and in this case, the HARQ process 0 may implement full scheduling of the user equipment. In other embodiments of the present invention, the HARQ processes 0 and 1 may be used as first HARQ processes, and the HARQ processes 2 to 7 are used as second HARQ processes. Alternatively, the HARQ processes 0, 1, and 2 may be used as first HARQ processes, and the HARQ processes 3 to 7 are used as second HARQ processes. A specific implementation may be determined according to an application scenario, and this is only used for description and is not intended for limitation.

In this embodiment of the present invention, each HARQ process has a unique NDI, and all downlink data sent by using a HARQ process carries an NDI. The NDI may include two statuses, for example, the first NDI includes a first state and a third state, and the second NDI includes a second state and a fourth state. For example, the NDI is one bit, each HARQ process has the unique NDI, and when the HARQ process is at a stage of initial transmission, the NDI is inverted (for example, inverted from 0 to 1 or from 1 to 0); and when the HARQ process is at a stage of retransmission, the NDI remains unchanged and is not inverted.

It should be noted that, in this embodiment of the present invention, that the first base station sends the first downlink authorization and the first downlink data to the UE by using the first HARQ process may be that the first base station sends the first downlink authorization to the UE by using the first HARQ process, and then sends the first downlink data to the UE at a frequency domain location indicated by the first downlink authorization. The UE may receive, according to the determined first downlink authorization, the first downlink data sent by the first base station. In addition, cases in which the first base station sends the second downlink authorization, the third downlink authorization, the fourth downlink authorization, the fifth downlink authorization, and the sixth downlink authorization so as to send downlink data are similar, and details are not described.

202. The first base station sends second downlink authorization and second downlink data to the UE at a second TTI by using a second HARQ process, where the second downlink data carries a second NDI in a second state.

In this embodiment of the present invention, in the preceding step 201, the first base station sends the first downlink authorization and the first downlink data to the UE at the first TTI by using the first HARQ process, and in step 202, the base station sends the second downlink authorization and the second downlink data to the UE at another moment (defined as the second TTI) different from the first TTI by using the second HARQ process provided in this embodiment of the present invention, where the second downlink data carries the second NDI in the second state. The second NDI carried in the second downlink data includes two statuses: the second state and the fourth state. The fourth state may be obtained by inverting the second state in the second NDI, and the second state may be obtained by inverting the fourth state. The second NDI is used to indicate, to the UE, whether data in this HARQ process is initially transmitted or retransmitted. If a value of the second NDI is different from that of downlink data stored in a cache corresponding to the second HARQ process, the UE considers that initial transmission is performed this time; otherwise, the UE considers that retransmission is performed this time. If the UE considers that retransmission is performed this time, the UE may combine HARQs, and obtain a multiplexing gain of the HARQ process. In this embodiment of the present invention, it may be learned from the foregoing content description that, the first HARQ process is used to implement full scheduling of the UE, and the second HARQ process is used to implement the multiplexing gain of the HARQ process. Therefore, it may be learned from the description of step 201 and step 202 that, the UE may respectively use two different HARQ processes at two different TTIs, and both the two types of HARQ processes may be used to send downlink data to the UE. By using the two types of HARQ processes, not only full scheduling can be ensured, but also the multiplexing gain of the HARQ can be obtained.

203. The first base station sends third downlink authorization and third downlink data to the UE at a third TTI by using the first HARQ process, where the third downlink data carries the first NDI in a third state, and the third state is obtained by inverting the first state of the first NDI.

In this embodiment of the present invention, it may be learned from the preceding step 201 and step 202 that, the first base station separately sends the first downlink data and the second downlink data to the UE. For an implementation scenario of inter-station cooperation, for example, a carrier aggregation scenario, the first base station is a base station of an SCC, and the second base station is a base station of a PCC. The UE receives the first downlink data, the UE sends, to the second base station, a first feedback result corresponding to the first downlink data, and the second base station then sends the first feedback result to the first base station. Similarly, the UE receives the second downlink data, the UE sends, to the second base station, a second feedback result corresponding to the second downlink data, and the second base station then sends the second feedback result to the first base station. In a scenario of inter-station cooperation between two base stations, there is certainly an inter-station transmission delay between the second base station and the first base station. Therefore, after the first base station sends the first downlink data to the UE at the first TTI, and before the first base station receives the first feedback result, the first base station has no available HARQ process, and the first base station may still use the first HARQ process to send the downlink data to the UE, so as to implement full scheduling of the UE. For example, the third TTI is a TTI after the first TTI, it is assumed that the first base station does not receive the first feedback result at the third TTI, and the first base station uses the first HARQ process again to send the third downlink authorization and the third downlink data to the UE, so as to implement full scheduling of the UE. It may be learned from step 201 that, the first NDI corresponding to the first HARQ process is in the first state, and when the first HARQ process is used again to send the third downlink data different from the first downlink data at the third TTI after the first TTI, status inversion needs to be performed on the first NDI corresponding to the first HARQ process, that is, the first NDI in the third state needs to be carried in the third downlink data, where the third state is obtained by inverting the first state of the first NDI.

In some embodiments of the present invention, the first base station sends the first downlink data to the UE at the first TTI, and the first base station receives, at the fifth TTI, the first feedback result that is sent by the second base station and that is corresponding to the first downlink data. The fifth TTI is after the first TTI, and the fifth TTI is after the third TTI. The data processing method provided in this embodiment of the present invention may further include the following step:
A1. The first base station receives, at a fifth TTI, a first feedback result that is sent by the second base station and that is corresponding to the first downlink data, and the first base station sends, at the fifth TTI by using the first HARQ process, fifth downlink authorization and the retransmitted first downlink data to the UE according to negative acknowledgement (NACK) information included in the first feedback result, where the retransmitted first downlink data carries the first NDI in the first state, the first state is obtained by inverting the third state of the first NDI, and a time difference between the fourth TTI and the second TTI is equal to a time difference between the fifth TTI and the first TTI.

After the first base station sends the first downlink data at the first TTI, and before the first base station receives the first feedback result at the fifth TTI, the first base station sends the third downlink data at the third TTI, so as to implement full scheduling of the UE. After the first base station receives the first feedback result at the fifth TTI, the first base station may obtain a status of receiving the first feedback result by the UE, that is, the first base station may learn whether the UE correctly receives the first downlink data. If the UE correctly receives the first downlink data, the first feedback result includes acknowledgement (ACK) information. If the UE incorrectly receives the first downlink data, the first feedback result includes the NACK information. When the first feedback result includes the NACK information, the first base station needs to retransmit the first downlink data to the UE, that is, needs to perform step A1. The first base station sends the fifth downlink authorization and the retransmitted first downlink data to the UE at the fifth TTI by using the first HARQ process, the retransmitted first downlink data carries the first NDI in the first state, and the first state is obtained by inverting the third state of the first NDI. It may be learned from step 203 that, the first NDI corresponding to the first HARQ process at the third TTI is in the third state, and if step A1 is performed, the first NDI corresponding to the first HARQ process at the third TTI further needs to be inverted, and in this case, the first NDI is inverted to the first state.

It should be noted that, in this embodiment of the present invention, the first HARQ process is used to implement full scheduling of the UE, and therefore, before the first base station receives the first feedback result sent by the second base station, the first base station may use the first HARQ for multiple times to send new downlink data to the UE, so as to implement full scheduling of the UE. For example, in some embodiments of the present invention, after step 203 in which the first base station sends the third downlink authorization and the third downlink data to the UE at the third TTI by using the first HARQ process, the data processing method provided in this embodiment of the present invention may further include the following step:
B1. The first base station sends sixth downlink authorization and fourth downlink data to the UE at a sixth TTI by using the first HARQ process, where the fourth downlink data carries the first NDI in the first state, and the first state is obtained by inverting the third state of the first NDI.

After the first TTI, there is the sixth TTI in addition to the third TTI, and the sixth TTI is a TTI after the third TTI. If it is assumed that the first base station does not receive the first feedback result at the sixth TTI, the first base station uses the first HARQ process again to send the sixth downlink authorization and the fourth downlink data, so as to implement full scheduling of the UE. It may be learned from step 203 that, the first NDI corresponding to the first HARQ process at the third TTI is in the third state, and when the first HARQ process is used again to send the fourth downlink data different from the third downlink data at the sixth TTI after the third TTI, status inversion needs to be performed on the first NDI corresponding to the first HARQ process, that is, the first NDI in the first state needs to be carried in the fourth downlink data, where the first state is obtained by inverting the third state of the first NDI.

It should be noted that, in this embodiment of the present invention, after the first base station sends the first downlink data to the UE by using the first HARQ process, and before the first base station receives the first feedback result corresponding to the first downlink data, the first base station may use the first HARQ process for multiple times to send new downlink data to the UE, so as to implement full scheduling of the UE.

In some embodiments of the present invention, step 203 in which the first base station sends the third downlink authorization and the third downlink data to the UE at the third TTI by using the first HARQ process may specifically include the following step:
C1. If the first base station determines, at the third TTI, that there is no available HARQ process, the first base station sends the third downlink authorization and the third downlink data to the UE at the third TTI by using a virtual HARQ process, where the virtual HARQ process is corresponding to the first HARQ process.

It may be learned from step 201 and step 202 that, the first base station sends the first downlink data and the second downlink data by respectively using the first HARQ process and the second HARQ process, the first base station determines, at the third TTI, that there is no available HARQ process, in this case, the first base station sends the third downlink authorization and the third downlink data to the UE at the third TTI by using the virtual HARQ process, and the virtual HARQ process is corresponding to the first HARQ process. For example, in this embodiment of the present invention, when the inter-station transmission delay causes downlink scheduling of the first base station to be not full, multiple HARQ processes (eight HARQ processes are used as an example) are virtualized. When finding that the real HARQ processes 0 to 7 are not available, a scheduler of the first base station applies for a HARQ process in virtual HARQ processes 8 to 15, and then maps the HARQ process to a real HARQ process of an air interface according to a mapping relationship (for example, in a modulo operation manner).

204. The first base station receives, at a fourth TTI, a second feedback result that is sent by a second base station and that is corresponding to the second downlink data, and the first base station sends, at the fourth TTI by using the second HARQ process, fourth downlink authorization and the retransmitted second downlink data to the UE according to NACK information included in the second feedback result, where the retransmitted second downlink data carries the second NDI in the second state.

There is the inter-station transmission delay between the second base station and the first base station.

In this embodiment of the present invention, the first base station sends the second downlink data to the UE at the second TTI, and the first base station receives, at the fourth TTI, the second feedback result that is sent by the second base station and that is corresponding to the second downlink data. The fourth TTI is after the second TTI, and the fourth TTI is after the third TTI. After the first base station sends the second downlink data at the second TTI, and before the first base station receives the second feedback result at the fourth TTI, the first base station sends the third downlink data at the third TTI, so as to implement full scheduling of the UE. After the first base station receives the second feedback result at the fourth TTI, the first base station may obtain a status of receiving the second feedback result by the UE, that is, the first base station may learn whether the UE correctly receives the second downlink data. If the UE correctly receives the second downlink data, the second feedback result includes ACK information. If the UE incorrectly receives the second downlink data, the second feedback result includes the NACK information. When the second feedback result includes the NACK information, the first base station needs to retransmit the second downlink data to the UE, that is, needs to perform step 204. The first base station sends the fourth downlink authorization and the retransmitted second downlink data to the UE at the fourth TTI by using the second HARQ process, the retransmitted second downlink data carries the second NDI in the second state, and a status of the second NDI at the second TTI is the second state. Because the second downlink data needs to be retransmitted at the fourth TTI by using the second HARQ process, the second NDI corresponding to the second HARQ process still maintains the second state, and the UE may determine, according to the second state used in the second NDI corresponding to the second HARQ process at the fourth TTI, that the first base station retransmits the second downlink data to the UE.

In some embodiments of the present invention, step 204 describes an implementation of the first base station when the second feedback result received by the first base station is the NACK information, and when the second feedback result is ACK information, the data processing method provided in this embodiment of the present invention may further include the following step:
D1. After the first base station receives, at the fourth TTI, the second feedback result that is sent by the second base station and that is corresponding to the second downlink data, the first base station sends, at the fourth TTI by using the second HARQ process, the fourth downlink authorization and fifth downlink data to the UE according to acknowledgement ACK information included in the second feedback result, where the fifth downlink data carries the second NDI in a fourth state, and the fourth state is obtained by inverting the second state of the second NDI.

If the UE correctly receives the second downlink data, the second feedback result includes the ACK information. When the second feedback result includes the ACK information, the first base station may send new downlink data to the UE, that is, the first base station needs to perform step D1, and the first base station sends the fourth downlink authorization and the fifth downlink data to the UE at the fourth TTI by using the second HARQ process. The fifth downlink data carries the second NDI in the fourth state, the second NDI corresponding to the second HARQ process at the second TTI is in the second state, the new downlink data is transmitted at the fourth TTI, and the fourth state is obtained by inverting the second state of the second NDI.

It may be learned from the example in the preceding embodiment of the present invention that, the first base station sends the first downlink authorization and the first downlink data to the UE at the first TTI by using the first HARQ process, where the first downlink data carries the first NDI in the first state; the first base station sends the second downlink authorization and the second downlink data to the UE at the second TTI by using the second HARQ process, where the second downlink data carries the second NDI in the second state; the first base station sends the third downlink authorization and the third downlink data to the UE at the third TTI by using the first HARQ process, where the third downlink data carries the first NDI in the third state, and the third state is obtained by inverting the first state of the first NDI; and the first base station receives, at the fourth TTI, the second feedback result that is sent by the second base station and that is corresponding to the second downlink data, and the first base station sends, at the fourth TTI by using the second HARQ process, the fourth downlink authorization and the retransmitted second downlink data to the UE according to the negative acknowledgement NACK information included in the second feedback result, where the retransmitted second downlink data carries the second NDI in the second state, and the inter-station transmission delay between the second base station and the first base station is a time difference between the fourth TTI and the first TTI. In this embodiment of the present invention, the first base station classifies HARQ processes into two types of processes: the first HARQ process and the second HARQ process. The first HARQ process may be used by the first base station to send the downlink data to the UE at the first TTI and the third TTI, so as to implement full scheduling of the UE, thereby improving utilization of the air interface resource. If there is the inter-station transmission delay between the first base station and the second base station, the first base station receives the second feedback result at the fourth TTI, and the first base station retransmits the second downlink data by using the second HARQ process. Because the status of the second NDI carried in the retransmitted second downlink data is not inverted (that is, the second NDI is still in the second state), the UE may jointly decode, according to the second NDI in the second state, the second downlink data sent by the first base station at the second TTI and the retransmitted second downlink data sent by the first base station at the fourth TTI, and therefore, the second HARQ process may implement the multiplexing gain of the HARQ process.

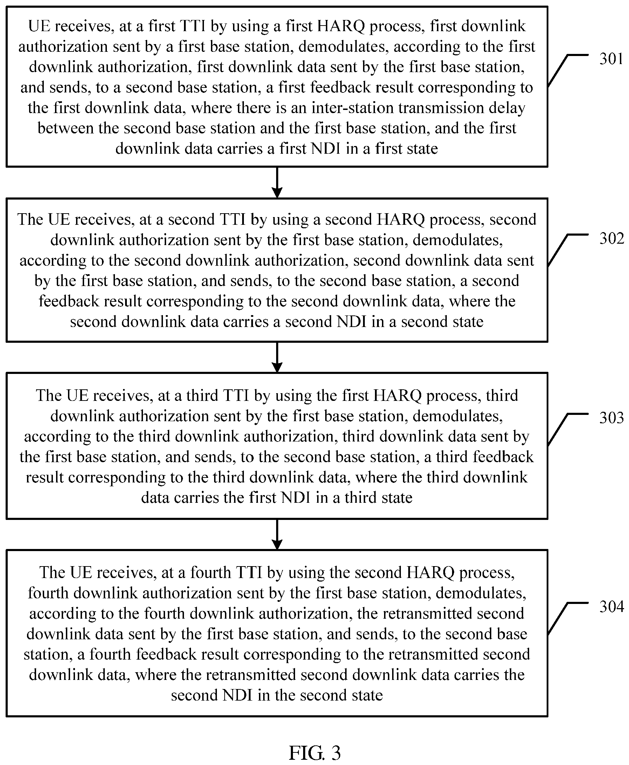

The preceding embodiment describes, on a first base station side, the data processing method provided in the embodiment of the present invention, and the following describes, on a UE side interacting with the first base station, a data processing method provided in an embodiment of the present invention. Referring to FIG. 3, another data processing method provided in this embodiment of the present invention may specifically include the following steps.

301. UE receives, at a first TTI by using a first HARQ process, first downlink authorization sent by a first base station, demodulates, according to the first downlink authorization, first downlink data sent by the first base station, and sends, to a second base station, a first feedback result corresponding to the first downlink data, where there is an inter-station transmission delay between the second base station and the first base station, and the first downlink data carries a first NDI in a first state.

In this embodiment of the present invention, the first base station sends the first downlink authorization to the UE at the first TTI by using the first HARQ process, and the UE receives the first downlink authorization at the first TTI by using the first HARQ process. The UE determines, from the first downlink authorization, a frequency domain location at which the first base station sends the first downlink data, and the UE then demodulates the first downlink data according to the first downlink authorization. The UE generates the first feedback result according to a status of receiving the first downlink data, and then sends, to the second base station, the first feedback result corresponding to the first downlink data. For example, if the UE correctly receives the first downlink data, the first feedback result includes ACK information, or if the UE incorrectly receives the first downlink data, the first feedback result includes NACK information. In addition, the UE may determine, according to a status of the first NDI carried in the first downlink data, whether the first base station initially transmits the first downlink data or retransmits the first downlink data.

In this embodiment of the present invention, the first base station classifies HARQ processes into two types of processes: the first HARQ process and the second HARQ process. The first HARQ process is only used for initial transmission of the HARQ process when there are not enough HARQ processes, and is used to ensure full scheduling of the UE. The first HARQ process is also referred to as an ordinary HARQ process. Full scheduling means that the UE receives downlink authorization at each TTI, and therefore, the HARQ process may be used to implement full scheduling of the UE. The second HARQ process retains a HARQ multiplexing gain in any case, and the second HARQ process is also referred to as a multiplexing HARQ process. In this embodiment of the present invention, a combination of the two types of HARQ processes is used to implement full scheduling and obtain an effect of the HARQ multiplexing gain. For example, it is specified in a protocol that there are eight HARQ processes altogether, which are respectively a HARQ process 0, a HARQ process 1, a HARQ process 2, ..., and a HARQ process 7. The eight HARQ processes are classified into two types. The HARQ process 0 is the first HARQ process, and the HARQ processes 1 to 7 are second HARQ processes. The HARQ processes 1 to 7 wait for feedback information of initial transmission scheduling to determine whether retransmission is to be performed. In this case, when initial transmission fails in the HARQ processes 1 to 7, retransmission may be implemented, and therefore, there is a retransmission gain in the second HARQ processes 1 to 7. Because there is a time difference that is caused by an inter-station transmission delay and that is in sending a feedback by one station to another station in the HARQ processes 1 to 7, the UE has no available scheduling resource in a period, and in this case, the HARQ process 0 may implement full scheduling of user equipment.

302. The UE receives, at a second TTI by using a second HARQ process, second downlink authorization sent by the first base station, demodulates, according to the second downlink authorization, second downlink data sent by the first base station, and sends, to the second base station, a second feedback result corresponding to the second downlink data, where the second downlink data carries a second NDI in a second state.

In this embodiment of the present invention, the first base station sends the second downlink authorization to the UE at the second TTI by using the second HARQ process, and the UE receives the second downlink authorization at the second TTI by using the second HARQ process. The UE determines, from the second downlink authorization, a frequency domain location at which the first base station sends the second downlink data, and the UE then demodulates the second downlink data according to the second downlink authorization. The UE generates the second feedback result according to a status of receiving the second downlink data, and then sends, to the first base station, the second feedback result corresponding to the second downlink data. For example, if the UE correctly receives the second downlink data, the second feedback result includes ACK information, or if the UE incorrectly receives the second downlink data, the second feedback result includes NACK information. In addition, the UE may determine, according to a status of the second NDI carried in the second downlink data, whether the first base station initially transmits the second downlink data or retransmits the second downlink data.

The second NDI carried in the second downlink data includes two statuses: the second state and the fourth state. The fourth state may be obtained by inverting the second state in the second NDI, and the second state may be obtained by inverting the fourth state. The second NDI is used to indicate, to the UE, whether data in this HARQ process is initially transmitted or retransmitted. If a value of the second NDI is different from that of downlink data stored in a cache corresponding to the second HARQ process, the UE considers that initial transmission is performed this time; otherwise, the UE considers that retransmission is performed this time. If the UE considers that retransmission is performed this time, the UE may combine HARQs, and obtain a multiplexing gain of the HARQ process. In this embodiment of the present invention, it may be learned from the foregoing content description that, the first HARQ process is used to implement full scheduling of the UE, and the second HARQ process is used to implement the multiplexing gain of the HARQ process. Therefore, it may be learned from the description of step 301 and step 302 that, the UE may respectively use two different HARQ processes at two different TTIs, and both the two types of HARQ processes may be used to send downlink data to the UE. By using the two types of HARQ processes, not only full scheduling can be ensured, but also the multiplexing gain of the HARQ can be obtained.

303. The UE receives, at a third TTI by using the first HARQ process, third downlink authorization sent by the first base station, demodulates, according to the third downlink authorization, third downlink data sent by the first base station, and sends, to the second base station, a third feedback result corresponding to the third downlink data, where the third downlink data carries the first NDI in a third state.

In this embodiment of the present invention, the UE receives the first downlink data, the UE sends, to the second base station, the first feedback result corresponding to the first downlink data, and the second base station then sends the first feedback result to the first base station. Similarly, the UE receives the second downlink data, the UE sends, to the second base station, the second feedback result corresponding to the second downlink data, and the second base station then sends the second feedback result to the first base station. In a scenario of inter-station cooperation between two base stations, there is certainly an inter-station transmission delay between the second base station and the first base station. Therefore, after the first base station sends the first downlink data to the UE at the first TTI, and before the first base station receives the first feedback result, the first base station has no available HARQ process, and the first base station may still use the first HARQ process to send the downlink data to the UE, so as to implement full scheduling of the UE. For example, the third TTI is a TTI after the first TTI, it is assumed that the first base station does not receive the first feedback result at the third TTI, and the first base station uses the first HARQ process again to send the third downlink authorization and the third downlink data to the UE, so as to implement full scheduling of the UE. The first NDI corresponding to the first HARQ process at the first TTI is in the first state, and when the first HARQ process is used again to send the third downlink data different from the first downlink data at the third TTI after the first TTI, status inversion needs to be performed on the first NDI corresponding to the first HARQ process, that is, the first NDI in the third state needs to be carried in the third downlink data, where the third state is obtained by inverting the first state of the first NDI.

In this embodiment of the present invention, the first base station sends the third downlink authorization to the UE at the third TTI by using the first HARQ process again, and the UE receives the third downlink authorization at the third TTI by using the first HARQ process. The UE determines, from the third downlink authorization, a frequency domain location at which the first base station sends the third downlink data, and the UE then demodulates the third downlink data according to the third downlink authorization. The UE generates the third feedback result according to a status of receiving the third downlink data, and then sends, to the first base station, the third feedback result corresponding to the third downlink data.

In some embodiments of the present invention, after step 302 is performed, the data processing method provided in this embodiment of the present invention further includes the following step:
D1. The UE receives, at a fifth TTI by using the first HARQ process, fifth downlink authorization sent by the first base station, and demodulates, according to the fifth downlink authorization, the retransmitted first downlink data sent by the first base station, where the retransmitted first downlink data carries the first NDI in the first state.

After the first base station sends the first downlink data at the first TTI, and before the first base station receives the first feedback result at the fifth TTI, the first base station sends the third downlink data at the third TTI, so as to implement full scheduling of the UE. After the first base station receives the first feedback result at the fifth TTI, the first base station may obtain a status of receiving the first feedback result by the UE, that is, the first base station may learn whether the UE correctly receives the first downlink data. If the UE correctly receives the first downlink data, the first feedback result includes acknowledgement (ACK) information. If the UE incorrectly receives the first downlink data, the first feedback result includes the NACK information. When the first feedback result includes the NACK information, the first base station needs to retransmit the first downlink data to the UE, that is, needs to perform step A1. The first base station sends the fifth downlink authorization and the retransmitted first downlink data to the UE at the fifth TTI by using the first HARQ process, the retransmitted first downlink data carries the first NDI in the first state, and the first state is obtained by inverting the third state of the first NDI. It may be learned from step 203 that, the first NDI corresponding to the first HARQ process at the third TTI is in the third state, and if step A1 is performed, the first NDI corresponding to the first HARQ process at the third TTI further needs to be inverted, and in this case, the first NDI is inverted to the first state.

In some embodiments of the present invention, step 303 in which the UE receives, at the third TTI by using the first HARQ process, the third downlink authorization sent by the first base station may specifically include the following step:
E1. The UE receives, at the third TTI by using a virtual HARQ process, the third downlink authorization sent by the first base station, where the virtual HARQ process is corresponding to the first HARQ process.

The first base station sends the first downlink data and the second downlink data by respectively using the first HARQ process and the second HARQ process, the first base station determines, at the third TTI, that there is no available HARQ process, in this case, the first base station sends the third downlink authorization and the third downlink data to the UE at the third TTI by using the virtual HARQ process, and the virtual HARQ process is corresponding to the first HARQ process. For example, in this embodiment of the present invention, when the inter-station transmission delay causes downlink scheduling of the first base station to be not full, multiple HARQ processes (eight HARQ processes are used as an example) are virtualized. When finding that the real HARQ processes 0 to 7 are not available, a scheduler of the first base station applies for a HARQ process in virtual HARQ processes 8 to 15, and then maps the HARQ process to a real HARQ process of an air interface according to a mapping relationship (for example, in a modulo operation manner).

In some embodiments of the present invention, step 303 in which the third downlink data sent by the first base station is demodulated according to the third downlink authorization may include the following implementation:
receiving, by the UE, the third downlink data according to an air interface resource indicated by the third downlink authorization; and
clearing, by the UE according to the first NDI that is carried in the third downlink data and that is in the third state, the first downlink data stored in a cache corresponding to the first HARQ process, and writing the third downlink data into the cache corresponding to the first HARQ process.

The UE receives the third downlink authorization at the third TTI by using the first HARQ process. The UE obtains the air interface resource indicated by the third downlink authorization, and may determine, by using the air interface resource, a frequency domain location at which the third downlink data is sent, and then the UE demodulates the third downlink data according to the third downlink authorization. A status of the first NDI corresponding to the first HARQ process at the first TTI is the first state. If the third downlink data carries the first NDI in the third state, it indicates that the status of the first NDI corresponding to the first HARQ process at the third TTI is inverted. The UE determines that the first base station sends new downlink data in this case, and therefore, the first downlink data stored in the cache corresponding to the first HARQ process is cleared.

304. The UE receives, at a fourth TTI by using the second HARQ process, fourth downlink authorization sent by the first base station, demodulates, according to the fourth downlink authorization, the retransmitted second downlink data sent by the first base station, and sends, to the second base station, a fourth feedback result corresponding to the retransmitted second downlink data, where the retransmitted second downlink data carries the second NDI in the second state.

In this embodiment of the present invention, the fourth TTI is after the second TTI, and the fourth TTI is after the third TTI. After the first base station sends the second downlink data at the second TTI, and before the first base station receives the second feedback result at the fourth TTI, the first base station sends the third downlink data at the third TTI, so as to implement full scheduling of the UE. In step 302, the UE sends, to the second base station, the second feedback result corresponding to the second downlink data, the second base station receives the second feedback result, and the second base station forwards the second feedback result to the first base station. Because there is the inter-station transmission delay between the second base station and the first base station, after the first base station receives the second feedback result at the fourth TTI, the first base station sends the retransmitted second downlink data to the UE at the fourth TTI according to the second feedback result NACK. The UE receives, at the fourth TTI by using the second HARQ process, the fourth downlink authorization sent by the first base station, demodulates, according to the fourth downlink authorization, the retransmitted second downlink data sent by the first base station, and sends, to the second base station, the fourth feedback result corresponding to the retransmitted second downlink data, where the retransmitted second downlink data carries the second NDI in the second state. The status of the second NDI at the second TTI is the second state. Because the second downlink data needs to be retransmitted at the fourth TTI by using the second HARQ process, the second NDI corresponding to the second HARQ process still maintains the second state, and the UE may determine, according to the second state used in the second NDI corresponding to the second HARQ process at the fourth TTI, that the first base station retransmits the second downlink data to the UE.

In some embodiments of the present invention, before step 304 in which the UE receives, at the fourth TTI by using the second HARQ process, the fourth downlink authorization sent by the first base station, the data processing method provided in this embodiment of the present invention further includes the following step:
F1. The UE receives, at a sixth TTI by using the first HARQ process, sixth downlink authorization sent by the first base station, and demodulates, according to the sixth downlink authorization, fourth downlink data sent by the first base station, where the fourth downlink data carries the first NDI in the first state.

After the first TTI, there is the sixth TTI in addition to the third TTI, and the sixth TTI is a TTI after the third TTI. If it is assumed that the first base station does not receive the first feedback result at the sixth TTI, the first base station uses the first HARQ process again to send the sixth downlink authorization and the fourth downlink data, so as to implement full scheduling of the UE. The UE receives, at the sixth TTI by using the first HARQ process, the sixth downlink authorization sent by the first base station, and demodulates, according to the sixth downlink authorization, the fourth downlink data sent by the first base station. The first NDI corresponding to the first HARQ process at the third TTI is in the third state, and when the first HARQ process is used again to send the fourth downlink data different from the third downlink data at the sixth TTI after the third TTI, status inversion needs to be performed on the first NDI corresponding to the first HARQ process, that is, the first NDI in the first state needs to be carried in the fourth downlink data, where the first state is obtained by inverting the third state of the first NDI.

It should be noted that, in this embodiment of the present invention, after the first base station sends the first downlink data to the UE by using the first HARQ process, and before the first base station receives the first feedback result corresponding to the first downlink data, the first base station may use the first HARQ process for multiple times to send new downlink data to the UE, so as to implement full scheduling of the UE.

In some embodiments of the present invention, step 304 describes an implementation in which the UE receives the retransmitted second downlink data at the fourth TTI when the second feedback result sent by the UE is the NACK, and when the second feedback result is ACK information, the data processing method provided in this embodiment of the present invention may further include the following step:
G1. After the UE receives, at the fourth TTI by using the second HARQ process, the fourth downlink authorization sent by the first base station, the UE demodulates, according to the fourth downlink authorization, fifth downlink data sent by the first base station, where the fifth downlink data carries the second NDI in a fourth state.

If the UE correctly receives the second downlink data, the second feedback result includes the ACK information. When the second feedback result includes the ACK information, the first base station may send new downlink data (that is, the fifth downlink data) to the UE, and in this case, the first base station needs to perform step G1. After the UE receives, at the fourth TTI by using the second HARQ process, the fourth downlink authorization sent by the first base station, the UE demodulates, according to the fourth downlink authorization, the fifth downlink data sent by the first base station. The fifth downlink data carries the second NDI in the fourth state, the second NDI corresponding to the second HARQ process at the second TTI is in the second state, the new downlink data is transmitted at the fourth TTI, and the fourth state is obtained by inverting the second state of the second NDI.

In some embodiments of the present invention, step 304 in which the retransmitted second downlink data sent by the first base station is demodulated according to the fourth downlink authorization may include the following implementation:
receiving, by the UE, the retransmitted second downlink data according to an air interface resource indicated by the fourth downlink authorization; and
combining, by the UE according to the second NDI that is carried in the retransmitted second downlink data and that is in the second state, the second downlink data stored in a cache corresponding to the second HARQ process with the retransmitted second downlink data, and writing a combination result into a cache corresponding to the second HARQ process.

The UE receives the fourth downlink authorization at the fourth TTI by using the second HARQ process. The UE obtains the air interface resource indicated by the fourth downlink authorization, and may determine, by using the air interface resource, a frequency domain location at which the retransmitted second downlink data is sent, and then the UE demodulates the retransmitted second downlink data according to the fourth downlink authorization. A status of the second NDI corresponding to the second HARQ process at the second TTI is the second state. If the retransmitted second downlink data carries the second NDI in the second state, it indicates that a status of the second NDI corresponding to the second HARQ process at the fourth TTI is not inverted. The UE determines that the first base station sends the retransmitted second downlink data in this case, and therefore, the UE combines the second downlink data stored in the cache corresponding to the second HARQ process with the retransmitted second downlink data, thereby obtaining a multiplexing gain of the HARQ process.

It may be learned from the example in the preceding embodiment of the present invention that, in this embodiment of the present invention, the first base station classifies HARQ processes into two types of processes: the first HARQ process and the second HARQ process. The first HARQ process may be used by the first base station to send the downlink data to the UE at the first TTI and the third TTI, so as to implement full scheduling of the UE, thereby improving utilization of the air interface resource. If there is the inter-station transmission delay between the first base station and the second base station, the first base station receives the second feedback result at the fourth TTI, and the first base station retransmits the second downlink data by using the second HARQ process. Because the status of the second NDI carried in the retransmitted second downlink data is not inverted (that is, the second NDI is still in the second state), the UE may jointly decode, according to the second NDI in the second state, the second downlink data sent by the first base station at the second TTI and the retransmitted second downlink data sent by the first base station at the fourth TTI, and therefore, the second HARQ process may implement the multiplexing gain of the HARQ process.

To better understand and implement the foregoing solutions in the embodiments of the present invention, the following uses a corresponding application scenario as an example for detailed description.

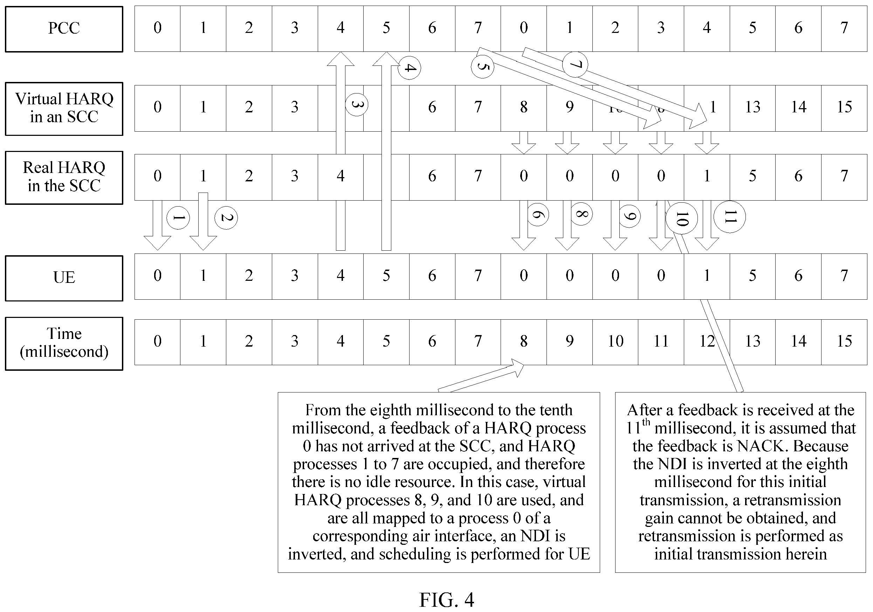

The following uses a CA scenario in which inter-station cooperative transmission is performed between two base stations as an example for description. A first base station is a base station in which an SCC is located, and a second base station is a base station in which a PCC is located. Referring to FIG. 4, FIG. 4 is a schematic diagram of a processing procedure of one HARQ process when an inter-station transmission delay is taken into consideration according to an embodiment of the present invention. This embodiment of the present invention uses a new HARQ allocation solution. This embodiment of the present invention is applied to a scenario in which an inter-station delay is large and cooperation is required, not only full scheduling can be implemented, but also a HARQ multiplexing gain can be ensured. In this embodiment of the present invention, not only full scheduling can be ensured, but also the HARQ multiplexing gain can be obtained. The following uses an example for description.

In this embodiment of the present invention, HARQ processes are classified into two types: a first HARQ process and a second HARQ process. The first HARQ process is an ordinary HARQ process, and is used to ensure full scheduling. The second HARQ process is a multiplexing HARQ process, and is used to obtain the HARQ multiplexing gain. The ordinary HARQ is used to maintain full scheduling of UE when an L2 scheduler of the SCC finds that no multiplexing HARQ can be obtained. The multiplexing HARQ is used to perform retransmission or initial transmission according to fed back ACK/NACK information, to obtain the multiplexing gain. There is certainly a retransmission gain in the multiplexing HARQ process.

The following uses a total of eight HARQ processes from a HARQ process 0 to a HARQ process 7 as an example. Specifically, the HARQ processes 0 and 1 are described. The process 0 is the ordinary HARQ process, the process 1 is the multiplexing HARQ process, and all the other HARQ processes are in a state of waiting for a feedback, and are unavailable processes.

As shown in FIG. 4, the processing procedure mainly includes the following steps.

Step 1: At a TTI 0, the L2 scheduler of the SCC successfully applies for the HARQ process 0, and schedules the UE. The UE receives data, and demodulates the data.

Step 2: At a TTI 1, the L2 scheduler of the SCC successfully applies for the HARQ process 1, and schedules the UE. The UE receives the data, and demodulates the data.

Step 3: At a TTI 4, the UE sends a feedback result of the HARQ process 0 to the PCC, and the PCC receives the feedback result, and starts to perform demodulation.

Step 4: At a TTI 5, the UE sends a feedback result of the HARQ process 1 to the PCC, and the PCC receives the feedback result, and starts to perform demodulation.

Step 5: At a TTI 7, the PCC obtains the result of the HARQ process 0 by means of demodulation, and sends the result to the SCC, where it is assumed that the result is NACK.

Step 6: At a TTI 8, the L2 scheduler of the SCC applies for a HARQ process, however, all HARQ processes are used, and there is no available idle resource; and the L2 scheduler of the SCC applies for a virtual HARQ process 8 corresponding to the ordinary HARQ process 0, so as to implement full scheduling, and inverts an NDI. After receiving scheduling at this moment, the UE clears a buffer in the HARQ process 0, and uses new data for replacement. It may be learned from FIG. 4 that data at the zeroth millisecond in the previous HARQ process 0 is replaced by data at the eighth millisecond in a new process 0.

Step 7: At a TTI 8, the PCC demodulates the feedback result of the HARQ process 1, and sends the result to the SCC, where it is assumed that the feedback result is NACK.

Step 8: At a TTI 9, the L2 scheduler of the SCC applies for a HARQ process, however, all HARQ processes are used, and there is no available idle resource; and therefore, the L2 scheduler of the SCC applies for a virtual HARQ process 9 corresponding to the ordinary HARQ process 0, so as to implement full scheduling, and inverts the NDI. After receiving scheduling at this moment, the UE clears a buffer in the HARQ process 0, and uses new data for replacement. It may be learned from FIG. 4 that data at the eighth millisecond in the HARQ process 0 is replaced by data at the ninth millisecond in a new process 0.

Step 9: At a TTI 10, the L2 scheduler of the SCC applies for a HARQ process, however, all HARQ processes are used, and there is no available idle resource; and therefore, the L2 scheduler of the SCC applies for a virtual HARQ process 10 corresponding to the ordinary HARQ process 0, so as to implement full scheduling, and inverts the NDI. After receiving scheduling at this moment, the UE clears a buffer in the HARQ process 0, and uses new data for replacement. It may be learned from

FIG. 4 that data at the ninth millisecond in the HARQ process 0 is replaced by data at the tenth millisecond in a new process 0.

Step 10: At a TTI 11, the L2 scheduler of the SCC receives demodulation information that is fed back by the PCC and that is at the TTI 0 moment in the HARQ process 0. Because a feedback value is NACK, the L2 scheduler of the SCC needs to perform retransmission. Because the HARQ process 0 cannot be used to perform retransmission, retransmission at this time can only be processed as initial transmission, the NDI is inverted, and a retransmission gain is lost.

Step 11: At a TTI 12, the L2 of the SCC receives demodulation information that is fed back by the PCC and that is at the TTI 1 moment in the HARQ process 1. Because a feedback value is NACK, the L2 scheduler of the SCC needs to perform retransmission. The L2 scheduler of the SCC applies for the HARQ process 1 according to a HARQ multiplexing gain solution, and does not invert the NDI. After receiving data, the UE combines the data with data received at the TTI 1 moment, so that the HARQ process 1 obtains the multiplexing gain.

It may be learned from the example in the preceding embodiment of the present invention that, for a problem that the prior art cannot ensure both full scheduling and the HARQ multiplexing gain, this embodiment of the present invention flexibly classifies HARQ processes, so that a method in which full scheduling can be implemented and the HARQ multiplexing gain can be obtained is implemented according to different functions of two types of HARQ processes. For the ordinary HARQ process and the multiplexing HARQ process, initial block error rates (English full name: Initial Block Error Rate, English abbreviation: IBLER) may be respectively configured. An IBLER of 1% may be configured for the ordinary HARQ process, so as to increase a correctness probability of first time transmission. A setting of the multiplexing HARQ process is the same as an existing default parameter, so as to maintain the HARQ multiplexing gain. A purpose of setting the IBLER of the ordinary HARQ process to 1% is to ensure that 99% initial transmission is correct. It should be noted that, the IBLER of the ordinary HARQ process is flexibly configured. For example, the IBLER of the ordinary HARQ process may be set to 5%, 10%, or the like, and is not limited herein.

It should be noted that, a cross-station CA scenario is used as the preceding example for description in the present invention. It may be understood that, so long as there is an inter-station transmission delay between two or more base stations, the preceding data processing method in this embodiment of the present invention may be used, for example, may be applied to features, such as DPS, JT, and an SFN, in which ACK/NACK needs to be exchanged between stations.

It should be noted that, for brief description, each preceding method embodiment is described as a combination of a series of actions. However, persons skilled in the art should understand that the present invention is not limited to the described order of the actions, because according to the present invention, some steps may be performed in another order or simultaneously.

To better implement the foregoing solutions in the embodiments of the present invention, the following further provides a related apparatus used to implement the foregoing solutions.

Referring to FIG. 5-a, an embodiment of the present invention provides a base station 500, and the base station 500 may be specifically a first base station. The base station 500 may include a first data processing module 501, a second data processing module 502, a third data processing module 503, and a fourth data processing module 504. The first data processing module 501 is configured to send first downlink authorization and first downlink data to user equipment UE at a first transmission time interval TTI by using a first hybrid automatic repeat request HARQ process, where the first downlink data carries a first new data indicator NDI in a first state. The second data processing module 502 is configured to send second downlink authorization and second downlink data to the UE at a second TTI by using a second HARQ process, where the second downlink data carries a second NDI in a second state.

The third data processing module 503 is configured to send third downlink authorization and third downlink data to the UE at a third TTI by using the first HARQ process, where the third downlink data carries the first NDI in a third state, and the third state is obtained by inverting the first state of the first NDI.

The fourth data processing module 504 is configured to: receive, at a fourth TTI, a second feedback result that is sent by a second base station and that is corresponding to the second downlink data, and send, at the fourth TTI by using the second HARQ process, fourth downlink authorization and the retransmitted second downlink data to the UE according to negative acknowledgement NACK information included in the second feedback result, where the retransmitted second downlink data carries the second NDI in the second state, and there is an inter-station transmission delay between the second base station and the first base station.

In some embodiments of the present invention, referring to FIG. 5-b, the first base station 500 further includes: a fifth data processing module 505, configured to: receive, at a fifth TTI, a first feedback result that is sent by the second base station and that is corresponding to the first downlink data, and send, at the fifth TTI by using the first HARQ process, fifth downlink authorization and the retransmitted first downlink data to the UE according to NACK information included in the first feedback result, where the retransmitted first downlink data carries the first NDI in the first state, the first state is obtained by inverting the third state of the first NDI, and a time difference between the fourth TTI and the second TTI is equal to a time difference between the fifth TTI and the first TTI.

In some embodiments of the present invention, referring to FIG. 5-c, relative to FIG. 5-a, the first base station 500 further includes: a sixth data processing module 506, configured to: after the third data processing module sends the third downlink authorization and the third downlink data to the UE at the third TTI by using the first HARQ process, send sixth downlink authorization and fourth downlink data to the UE at a sixth TTI by using the first HARQ process, where the fourth downlink data carries the first NDI in the first state, and the first state is obtained by inverting the third state of the first NDI.

In some embodiments of the present invention, the third data processing module 503 is specifically configured to: if the first base station determines, at the third TTI, that there is no available HARQ process, send the third downlink authorization and the third downlink data to the UE at the third TTI by using a virtual HARQ process, where the virtual HARQ process is corresponding to the first HARQ process.

In some embodiments of the present invention, after receiving, at the fourth TTI, the second feedback result that is sent by the second base station and that is corresponding to the second downlink data, the fourth data processing module 504 is further configured to send, at the fourth TTI by using the second HARQ process, the fourth downlink authorization and fifth downlink data to the UE according to acknowledgement ACK information included in the second feedback result, where the fifth downlink data carries the second NDI in a fourth state, and the fourth state is obtained by inverting the second state of the second NDI.

It may be learned from the example in the preceding embodiment of the present invention that, the first base station sends the first downlink authorization and the first downlink data to the UE at the first TTI by using the first HARQ process, where the first downlink data carries the first NDI in the first state; the first base station sends the second downlink authorization and the second downlink data to the UE at the second TTI by using the second HARQ process, where the second downlink data carries the second NDI in the second state; the first base station sends the third downlink authorization and the third downlink data to the UE at the third TTI by using the first HARQ process, where the third downlink data carries the first NDI in the third state, and the third state is obtained by inverting the first state of the first NDI; and the first base station receives, at the fourth TTI, the second feedback result that is sent by the second base station and that is corresponding to the second downlink data, and the first base station sends, at the fourth TTI by using the second HARQ process, the fourth downlink authorization and the retransmitted second downlink data to the UE according to the negative acknowledgement NACK information included in the second feedback result, where the retransmitted second downlink data carries the second NDI in the second state, and the inter-station transmission delay between the second base station and the first base station is a time difference between the fourth TTI and the first TTI. In this embodiment of the present invention, the first base station classifies HARQ processes into two types of processes: the first HARQ process and the second HARQ process. The first HARQ process may be used by the first base station to send the downlink data to the UE at the first TTI and the third TTI, so as to implement full scheduling of the UE, thereby improving utilization of the air interface resource. If there is the inter-station transmission delay between the first base station and the second base station, the first base station receives the second feedback result at the fourth TTI, and the first base station retransmits the second downlink data by using the second HARQ process. Because the status of the second NDI carried in the retransmitted second downlink data is not inverted (that is, the second NDI is still in the second state), the UE may jointly decode, according to the second NDI in the second state, the second downlink data sent by the first base station at the second TTI and the retransmitted second downlink data sent by the first base station at the fourth TTI, and therefore, the second HARQ process may implement the multiplexing gain of the HARQ process.

Referring to FIG. 6-a, an embodiment of the present invention provides UE 600. The UE 600 may include a first data processing module 601, a second data processing module 602, a third data processing module 603, and a fourth data processing module 604.

The first data processing module 601 is configured to: receive, at a first transmission time interval TTI by using a first hybrid automatic repeat request HARQ process, first downlink authorization sent by a first base station, demodulate, according to the first downlink authorization, first downlink data sent by the first base station, and send, to a second base station, a first feedback result corresponding to the first downlink data, where there is an inter-station transmission delay between the second base station and the first base station, and the first downlink data carries a first new data indicator NDI in a first state.

The second data processing module 602 is configured to: receive, at a second TTI by using a second HARQ process, second downlink authorization sent by the first base station, demodulate, according to the second downlink authorization, second downlink data sent by the first base station, and send, to the second base station, a second feedback result corresponding to the second downlink data, where the second downlink data carries a second NDI in a second state.

The third data processing module 603 is configured to: receive, at a third TTI by using the first HARQ process, third downlink authorization sent by the first base station, demodulate, according to the third downlink authorization, third downlink data sent by the first base station, and send, to the second base station, a third feedback result corresponding to the third downlink data, where the third downlink data carries the first NDI in a third state.

The fourth data processing module 604 is configured to: receive, at a fourth TTI by using the second HARQ process, fourth downlink authorization sent by the first base station, demodulate, according to the fourth downlink authorization, the retransmitted second downlink data sent by the first base station, and send, to the second base station, a fourth feedback result corresponding to the retransmitted second downlink data, where the retransmitted second downlink data carries the second NDI in the second state.

In some embodiments of the present invention, referring to FIG. 6-b, relative to FIG. 6-a, the UE 600 may further include: a fifth data processing module 605, configured to: receive, at a fifth TTI by using the first HARQ process, fifth downlink authorization sent by the first base station, and demodulate, according to the fifth downlink authorization, the retransmitted first downlink data sent by the first base station, where the retransmitted first downlink data carries the first NDI in the first state.

In some embodiments of the present invention, referring to FIG. 6-c, relative to FIG. 6-a, the UE 600 may further include: a sixth data processing module 606, configured to: before the fourth data processing module receives, at the fourth TTI by using the second HARQ process, the fourth downlink authorization sent by the first base station, receive, at a sixth TTI by using the first HARQ process, sixth downlink authorization sent by the first base station, and demodulate, according to the sixth downlink authorization, fourth downlink data sent by the first base station, where the fourth downlink data carries the first NDI in the first state.

In some embodiments of the present invention, the third data processing module 603 is specifically configured to receive, at the third TTI by using a virtual HARQ process, the third downlink authorization sent by the first base station, and the virtual HARQ process is corresponding to the first HARQ process.

In some embodiments of the present invention, the fourth data processing module 604 is further configured to demodulate, according to the fourth downlink authorization, fifth downlink data sent by the first base station, where the fifth downlink data carries the second NDI in a fourth state.

In some embodiments of the present invention, the third data processing module 603 is specifically configured to: receive the third downlink data according to an air interface resource indicated by the third downlink authorization; and clear, according to the first NDI that is carried in the third downlink data and that is in the third state, the first downlink data stored in a cache corresponding to the first HARQ process, and write the third downlink data into the cache corresponding to the first HARQ process. In some embodiments of the present invention, the fourth data processing module 604 is specifically configured to: receive the retransmitted second downlink data according to an air interface resource indicated by the fourth downlink authorization; and combine, according to the second NDI that is carried in the retransmitted second downlink data and that is in the second state, the second downlink data stored in a cache corresponding to the second HARQ process with the retransmitted second downlink data, and write a combination result into a cache corresponding to the second HARQ process.

It may be learned from the example in the preceding embodiment of the present invention that, in this embodiment of the present invention, the first base station classifies HARQ processes into two types of processes: the first HARQ process and the second HARQ process. The first HARQ process may be used by the first base station to send the downlink data to the UE at the first TTI and the third TTI, so as to implement full scheduling of the UE, thereby improving utilization of the air interface resource. If there is the inter-station transmission delay between the first base station and the second base station, the first base station receives the second feedback result at the fourth TTI, and the first base station retransmits the second downlink data by using the second HARQ process. Because the status of the second NDI carried in the retransmitted second downlink data is not inverted (that is, the second NDI is still in the second state), the UE may jointly decode, according to the second NDI in the second state, the second downlink data sent by the first base station at the second TTI and the retransmitted second downlink data sent by the first base station at the fourth TTI, and therefore, the second HARQ process may implement the multiplexing gain of the HARQ process.

It should be noted that content such as information exchange between the modules/units of the apparatus and the execution processes thereof is based on the same concept as the method embodiments of the present invention, and produces the same technical effects as the method embodiments of the present invention. For the specific content, refer to the description in the preceding method embodiments of the present invention, and details are not described herein again.

An embodiment of the present invention further provides a computer storage medium. The computer storage medium stores a program, and the program executes some or all of steps described in the foregoing method embodiments.

The following describes another base station provided in an embodiment of the present invention, and the base station is specifically a first base station. Referring to FIG. 7, a base station 700 includes:
a receiver 701, a transmitter 702, a processor 703, and a memory 704 (there may be one or more processors 703 in the base station 700, and one processor is used as an example in FIG. 7). In some embodiments of the present invention, the receiver 701, the transmitter 702, the processor 703, and the memory 704 may be connected by using a bus or in another manner. In FIG. 7, connection performed by using a bus is used as an example.

The processor 703 is configured to perform the following steps:
sending first downlink authorization and first downlink data to user equipment UE at a first transmission time interval TTI by using a first hybrid automatic repeat request HARQ process, where the first downlink data carries a first new data indicator NDI in a first state;
sending second downlink authorization and second downlink data to the UE at a second TTI by using a second HARQ process, where the second downlink data carries a second NDI in a second state;
sending third downlink authorization and third downlink data to the UE at a third TTI by using the first HARQ process, where the third downlink data carries the first NDI in a third state, and the third state is obtained by inverting the first state of the first NDI; and
receiving, at a fourth TTI, a second feedback result that is sent by a second base station and that is corresponding to the second downlink data, and sending, by the first base station at the fourth TTI by using the second HARQ process, fourth downlink authorization and the retransmitted second downlink data to the UE according to negative acknowledgement NACK information included in the second feedback result, where the retransmitted second downlink data carries the second NDI in the second state, and there is an inter-station transmission delay between the second base station and the first base station.

In some embodiments of the present invention, the processor 703 is further configured to perform the following steps:
receiving, at a fifth TTI, a first feedback result that is sent by the second base station and that is corresponding to the first downlink data, and
sending, by the first base station at the fifth TTI by using the first HARQ process, fifth downlink authorization and the retransmitted first downlink data to the UE according to NACK information included in the first feedback result, where the retransmitted first downlink data carries the first NDI in the first state, the first state is obtained by inverting the third state of the first NDI, and a time difference between the fourth TTI and the second TTI is equal to a time difference between the fifth TTI and the first TTI.

In some embodiments of the present invention, the processor 703 is further configured to perform the following step:
after the sending third downlink authorization and third downlink data to the UE at a third TTI by using the first HARQ process, sending sixth downlink authorization and fourth downlink data to the UE at a sixth TTI by using the first HARQ process, where the fourth downlink data carries the first NDI in the first state, and the first state is obtained by inverting the third state of the first NDI.

In some embodiments of the present invention, the processor 703 is specifically configured to perform the following step:
if the first base station determines, at the third TTI, that there is no available HARQ process, sending the third downlink authorization and the third downlink data to the UE at the third TTI by using a virtual HARQ process, where the virtual HARQ process is corresponding to the first HARQ process.

In some embodiments of the present invention, the processor 703 is further configured to perform the following step: after the receiving, at a fourth TTI, a second feedback result that is sent by a second base station and that is corresponding to the second downlink data, sending, at the fourth TTI by using the second HARQ process, the fourth downlink authorization and fifth downlink data to the UE according to acknowledgement ACK information included in the second feedback result, where the fifth downlink data carries the second NDI in a fourth state, and the fourth state is obtained by inverting the second state of the second NDI.

It may be learned from the example in the preceding embodiment of the present invention that, the first base station sends the first downlink authorization and the first downlink data to the UE at the first TTI by using the first HARQ process, where the first downlink data carries the first NDI in the first state; the first base station sends the second downlink authorization and the second downlink data to the UE at the second TTI by using the second HARQ process, where the second downlink data carries the second NDI in the second state; the first base station sends the third downlink authorization and the third downlink data to the UE at the third TTI by using the first HARQ process, where the third downlink data carries the first NDI in the third state, and the third state is obtained by inverting the first state of the first NDI; and the first base station receives, at the fourth TTI, the second feedback result that is sent by the second base station and that is corresponding to the second downlink data, and the first base station sends, at the fourth TTI by using the second HARQ process, the fourth downlink authorization and the retransmitted second downlink data to the UE according to the negative acknowledgement NACK information included in the second feedback result, where the retransmitted second downlink data carries the second NDI in the second state, and the inter-station transmission delay between the second base station and the first base station is a time difference between the fourth TTI and the first TTI. In this embodiment of the present invention, the first base station classifies HARQ processes into two types of processes: the first HARQ process and the second HARQ process. The first HARQ process may be used by the first base station to send the downlink data to the UE at the first TTI and the third TTI, so as to implement full scheduling of the UE, thereby improving utilization of the air interface resource. If there is the inter-station transmission delay between the first base station and the second base station, the first base station receives the second feedback result at the fourth TTI, and the first base station retransmits the second downlink data by using the second HARQ process. Because the status of the second NDI carried in the retransmitted second downlink data is not inverted (that is, the second NDI is still in the second state), the UE may jointly decode, according to the second NDI in the second state, the second downlink data sent by the first base station at the second TTI and the retransmitted second downlink data sent by the first base station at the fourth TTI, and therefore, the second HARQ process may implement the multiplexing gain of the HARQ process.

The following describes another UE provided in an embodiment of the present invention. Referring to FIG. 8, UE 800 includes:
an input apparatus 801, an output apparatus 802, a processor 803, and a memory 804 (there may be one or more processors 803 in the UE 800, and one processor is used as an example in FIG. 8). In some embodiments of the present invention, the input apparatus 801, the output apparatus 802, the processor 803, and the memory 804 may be connected by using a bus or in another manner. In FIG. 8, connection performed by using a bus is used as an example.

The processor 803 is configured to perform the following steps:
receiving, at a first transmission time interval TTI by using a first hybrid automatic repeat request HARQ process, first downlink authorization sent by a first base station, demodulating, according to the first downlink authorization, first downlink data sent by the first base station, and sending, to a second base station, a first feedback result corresponding to the first downlink data, where there is an inter-station transmission delay between the second base station and the first base station, and the first downlink data carries a first new data indicator NDI in a first state;
receiving, at a second TTI by using a second HARQ process, second downlink authorization sent by the first base station, demodulating, according to the second downlink authorization, second downlink data sent by the first base station, and sending, to the second base station, a second feedback result corresponding to the second downlink data, where the second downlink data carries a second NDI in a second state;
receiving, at a third TTI by using the first HARQ process, third downlink authorization sent by the first base station, demodulating, according to the third downlink authorization, third downlink data sent by the first base station, and sending, to the second base station, a third feedback result corresponding to the third downlink data, where the third downlink data carries the first NDI in a third state; and
receiving, at a fourth TTI by using the second HARQ process, fourth downlink authorization sent by the first base station, demodulating, according to the fourth downlink authorization, the retransmitted second downlink data sent by the first base station, and sending, to the second base station, a fourth feedback result corresponding to the retransmitted second downlink data, where the retransmitted second downlink data carries the second NDI in the second state.

In some embodiments of the present invention, the processor 803 is further configured to perform the following steps:
receiving, at a fifth TTI by using the first HARQ process, fifth downlink authorization sent by the first base station, and demodulating, according to the fifth downlink authorization, the retransmitted first downlink data sent by the first base station, where the retransmitted first downlink data carries the first NDI in the first state.

In some embodiments of the present invention, the processor 803 is further configured to perform the following steps: before the receiving, at a fourth TTI by using the second HARQ process, fourth downlink authorization sent by the first base station, receiving, at a sixth TTI by using the first HARQ process, sixth downlink authorization sent by the first base station, and demodulating, according to the sixth downlink authorization, fourth downlink data sent by the first base station, where the fourth downlink data carries the first NDI in the first state.

In some embodiments of the present invention, the processor 803 is specifically configured to perform the following step:
receiving, at the third TTI by using a virtual HARQ process, the third downlink authorization sent by the first base station, where the virtual HARQ process is corresponding to the first HARQ process.

In some embodiments of the present invention, the processor 803 is further configured to perform the following step: after the receiving, at a fourth TTI by using the second HARQ process, fourth downlink authorization sent by the first base station, demodulating, according to the fourth downlink authorization, fifth downlink data sent by the first base station, where the fifth downlink data carries the second NDI in a fourth state.

In some embodiments of the present invention, the processor 803 is specifically configured to perform the following steps:
receiving the third downlink data according to an air interface resource indicated by the third downlink authorization; and
clearing, according to the first NDI that is carried in the third downlink data and that is in the third state, the first downlink data stored in a cache corresponding to the first HARQ process, and writing the third downlink data into the cache corresponding to the first HARQ process.

In some embodiments of the present invention, the processor 803 is specifically configured to perform the following steps:
receiving the retransmitted second downlink data according to an air interface resource indicated by the fourth downlink authorization; and
combining, according to the second NDI that is carried in the retransmitted second downlink data and that is in the second state, the second downlink data stored in a cache corresponding to the second HARQ process with the retransmitted second downlink data, and writing a combination result into a cache corresponding to the second HARQ process.

It may be learned from the example in the preceding embodiment of the present invention that, in this embodiment of the present invention, the first base station classifies HARQ processes into two types of processes: the first HARQ process and the second HARQ process. The first HARQ process may be used by the first base station to send the downlink data to the UE at the first TTI and the third TTI, so as to implement full scheduling of the UE, thereby improving utilization of the air interface resource. If there is the inter-station transmission delay between the first base station and the second base station, the first base station receives the second feedback result at the fourth TTI, and the first base station retransmits the second downlink data by using the second HARQ process. Because the status of the second NDI carried in the retransmitted second downlink data is not inverted (that is, the second NDI is still in the second state), the UE may jointly decode, according to the second NDI in the second state, the second downlink data sent by the first base station at the second TTI and the retransmitted second downlink data sent by the first base station at the fourth TTI, and therefore, the second HARQ process may implement the multiplexing gain of the HARQ process.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. Persons of ordinary skill in the art may understand and implement the embodiments of the present invention without creative efforts.

Based on the description of the foregoing implementations, persons skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware.

Moreover, a specific hardware structure used to achieve a same function may be of various forms, for example, in a form of an analog circuit, a digital circuit, a dedicated circuit, or the like. However, as for the present invention, software program implementation is a better implementation in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described in the embodiments of the present invention.

The foregoing embodiments are merely intended for describing the technical solutions of the present invention, but not for limiting the present invention. The invention is defined and limited by the scope of appended claims 1-8.

## Claims

1. A data scheduling method, comprising:
a) sending (201), by a first base station, first downlink authorization and first downlink data to a mobile device at a first transmission time interval, TTI, by using a first hybrid automatic repeat request, HARQ, process, wherein the first downlink data carries a first new data indicator ,NDI, in a first state;
b) sending (202), by the first base station, second downlink authorization and second downlink data to the mobile device at a second TTI by using a second HARQ process, wherein the second downlink data carries a second NDI in a second state;
c) sending (203), by the first base station, third downlink authorization and third downlink data to the mobile device at a third TTI by using the first HARQ process, wherein the third downlink data carries the first NDI in a third state, and the third state is obtained by inverting the first state of the first NDI; and
d) receiving (204), by the first base station at a fourth TTI, a second feedback result that is sent by a second base station and that is corresponding to the second downlink data, and sending, by the first base station at the fourth TTI by using the second HARQ process, fourth downlink authorization and the retransmitted second downlink data to the mobile device according to negative acknowledgement NACK information comprised in the second feedback result,
e) wherein the retransmitted second downlink data carries the second NDI in the second state, and there is an inter-station transmission delay between the second base station and the first base station;
f) receiving, by the first base station at a fifth TTI, a first feedback result that is sent by the second base station and that is corresponding to the first downlink data, and sending, by the first base station at the fifth TTI by using the first HARQ process, fifth downlink authorization and the retransmitted first downlink data to the mobile device according to NACK information comprised in the first feedback result, wherein the retransmitted first downlink data carries the first NDI in the first state, the first state is obtained by inverting the third state of the first NDI, and a time difference between the fourth TTI and the second TTI is equal to a time difference between the fifth TTI and the first TTI; and
g) wherein full scheduling is achieved by using the first HARQ process to send third downlink data to the mobile station in the third TTI
- after sending the first data in the first TTI and before receiving the first feedback result at the fifth TTI and
- after sending the second data at the second TTI and before receiving the second feedback result at the fourth TTI.

2. The method according to claim 1, wherein after the sending, by the first base station, third downlink authorization and third downlink data to the mobile device at a third TTI by using the first HARQ process, the method further comprises:
sending, by the first base station, sixth downlink authorization and fourth downlink data to the mobile device at a sixth TTI by using the first HARQ process, wherein the fourth downlink data carries the first NDI in the first state, and the first state is obtained by inverting the third state of the first NDI.

3. The method according to any one of claims 1 to 2, wherein the sending, by the first base station, third downlink authorization and third downlink data to the mobile device at a third TTI by using the first HARQ process comprises:
if the first base station determines, at the third TTI, that there is no available HARQ process, sending, by the first base station, the third downlink authorization and the third downlink data to the mobile device at the third TTI by using a virtual HARQ process, wherein the virtual HARQ process is corresponding to the first HARQ process.

4. The method according to any one of claims 1 to 2, wherein after the receiving, by the first base station at a fourth TTI, a second feedback result that is sent by a second base station and that is corresponding to the second downlink data, the method further comprises:
sending, by the first base station at the fourth TTI by using the second HARQ process, the fourth downlink authorization and fifth downlink data to the mobile device according to acknowledgement ACK information comprised in the second feedback result, wherein the fifth downlink data carries the second NDI in a fourth state, and the fourth state is obtained by inverting the second state of the second NDI.

5. Abase station (500), wherein the base station is specifically a first base station, and the first base station comprises:
a) a first data processing module (501), configured to send first downlink authorization and first downlink data to a mobile device at a first transmission time interval, TTI, by using a first hybrid automatic repeat request ,HARQ, process, wherein the first downlink data carries a first new data indicator ,NDI. in a first state;
b) a second data processing module (502), configured to send second downlink authorization and second downlink data to the mobile device at a second TTI by using a second HARQ process, wherein the second downlink data carries a second NDI in a second state;
c) a third data processing module (503), configured to send third downlink authorization and third downlink data to the mobile device at a third TTI by using the first HARQ process, wherein the third downlink data carries the first NDI in a third state, and the third state is obtained by inverting the first state of the first NDI; and
d) a fourth data processing module (504), configured to: receive, at a fourth TTI, a second feedback result that is sent by a second base station and that is corresponding to the second downlink data, and send, at the fourth TTI by using the second HARQ process, fourth downlink authorization and the retransmitted second downlink data to the mobile device according to negative acknowledgement NACK information comprised in the second feedback result,
e) wherein the retransmitted second downlink data carries the second NDI in the second state, and there is an inter-station transmission delay between the second base station and the first base station; and
f) a fifth data processing module (505), configured to: receive, at a fifth TTI, a first feedback result that is sent by the second base station and that is corresponding to the first downlink data, and send, at the fifth TTI by using the first HARQ process, fifth downlink authorization and the retransmitted first downlink data to the mobile device according to NACK information comprised in the first feedback result, wherein the retransmitted first downlink data carries the first NDI in the first state, the first state is obtained by inverting the third state of the first NDI, and a time difference between the fourth TTI and the second TTI is equal to a time difference between the fifth TTI and the first TTI; and
g) wherein full scheduling is achieved by the first base station being adapted to use the first HARQ process to send third downlink data to the mobile station in the third TTI
- after sending the first data in the first TTI and before receiving the first feedback result at the fifth TTI and
- after sending the second data at the second TTI and before receiving the second feedback result at the fourth TTI.

6. The base station according to claim 5, wherein the first base station further comprises:
a sixth data processing module (506), configured to: after the third data processing module sends the third downlink authorization and the third downlink data to the mobile device at the third TTI by using the first HARQ process, send sixth downlink authorization and fourth downlink data to the mobile device at a sixth TTI by using the first HARQ process, wherein the fourth downlink data carries the first NDI in the first state, and the first state is obtained by inverting the third state of the first NDI.

7. The base station according to any one of claims 5 to 6, wherein the third data processing module is specifically configured to: if the first base station determines, at the third TTI, that there is no available HARQ process, send the third downlink authorization and the third downlink data to the mobile device at the third TTI by using a virtual HARQ process, wherein the virtual HARQ process is corresponding to the first HARQ process.

8. The base station according to any one of claims 5 to 7, wherein after receiving, at the fourth TTI, the second feedback result that is sent by the second base station and that is corresponding to the second downlink data, the fourth data processing module is further configured to send, at the fourth TTI by using the second HARQ process, the fourth downlink authorization and fifth downlink data to the mobile device according to acknowledgement ACK information comprised in the second feedback result, wherein the fifth downlink data carries the second NDI in a fourth state, and the fourth state is obtained by inverting the second state of the second NDI.

## Patentansprüche

1. Datenplanungsverfahren, das Folgendes umfasst:
a) Senden (201) durch eine erste Basisstation einer ersten Downlink-Autorisierung und erster Downlink-Daten zu einer mobilen Vorrichtung in einem ersten Übertragungszeitintervall, TTI, durch Verwenden eines ersten hybriden automatischen Wiederholungsanforderungs(HARQ)-prozesses, wobei die ersten Downlink-Daten einen ersten Neudatenindikator, NDI, in einem ersten Zustand übermitteln;
b) Senden (202) durch die erste Basisstation einer zweiten Downlink-Autorisierung und zweiter Downlink-Daten zu der mobilen Vorrichtung in einem zweiten TTI durch Verwenden eines zweiten HARQ-Prozesses, wobei die zweiten Downlink-Daten einen zweiten NDI in einem zweiten Zustand übermitteln;
c) Senden (203) durch die erste Basisstation einer dritten Downlink-Autorisierung und dritter Downlink-Daten zu der mobilen Vorrichtung in einem dritten TTI unter Verwendung des ersten HARQ-Prozesses, wobei die dritten Downlink-Daten den ersten NDI in einem dritten Zustand übermitteln und der dritte Zustand durch Umkehren des ersten Zustands des ersten NDI erhalten wird; und
d) Erhalten (204) durch die erste Basisstation in einem vierten TTI eines zweiten Rückmeldungsergebnisses, das von einer zweiten Basisstation gesendet wird und das den zweiten Downlink-Daten entspricht, und Senden durch die erste Basisstation in dem vierten TTI durch Verwenden des zweiten HARQ-Prozesses einer vierten Downlink-Autorisierung und der weitergeleiteten zweiten Downlink-Daten zu der mobilen Vorrichtung gemäß negativer Rückmeldungs(NACK)-informationen, die in dem zweiten Rückmeldungsergebnis enthalten sind,
e) wobei die weitergeleiteten zweiten Downlink-Daten den zweiten NDI in dem zweiten Zustand übermitteln und eine Zwischenstationsübertragungsverzögerung zwischen der zweiten Basisstation und der ersten Basisstation vorliegt;
f) Empfangen durch die erste Basisstation in einem fünften TTI eines ersten Rückmeldungsergebnisses, das von der zweiten Basisstation gesendet wird und das den ersten Downlink-Daten entspricht, und Senden durch die erste Basisstation in dem fünften TTI durch Verwenden des ersten HARQ-Prozesses einer fünften Downlink-Autorisierung und der weitergeleiteten ersten Downlink-Daten zu der mobilen Vorrichtung gemäß NACK-Informationen, die in dem ersten Rückmeldungsergebnis enthalten sind, wobei die weitergeleiteten ersten Downlink-Daten den ersten NDI in dem ersten Zustand übermitteln, der erste Zustand durch Umkehren des dritten Zustands des ersten NDI erhalten wird und eine Zeitdifferenz zwischen dem vierten TTI und dem zweiten TTI einer Zeitdifferenz zwischen dem fünften TTI und dem ersten TTI entspricht; und
g) wobei eine vollständige Planung durch Verwenden des ersten HARQ-Prozesses zum Senden von dritten Downlink-Daten zu der mobilen Station in dem dritten TTI erreicht wird
- nachdem die ersten Daten in dem ersten TTI gesendet werden und bevor das erste Rückmeldungsergebnis in dem fünften TTI erhalten wird und
- nachdem die zweiten Daten in dem zweiten TTI gesendet werden und bevor das zweite Rückmeldungsergebnis in dem vierten TTI erhalten wird.

2. Verfahren nach Anspruch 1, wobei nach dem Senden durch die erste Basisstation einer dritten Downlink-Autorisierung und dritter Downlink-Daten zu der mobilen Vorrichtung in einem dritten TTI durch Verwenden des ersten HARQ-Prozesses das Verfahren ferner Folgendes umfasst:
Senden durch die erste Basisstation einer sechsten Downlink-Autorisierung und vierter Downlink-Daten zu der mobilen Vorrichtung in einem sechsten TTI durch Verwenden des ersten HARQ-Prozesses, wobei die vierten Downlink-Daten den ersten NDI in dem ersten Zustand übermitteln und der erste Zustand durch Umkehren des dritten Zustands des ersten NDI erhalten wird.

3. Verfahren nach einem der Ansprüche 1 bis 2, wobei das Senden durch die erste Basisstation einer dritten Downlink-Autorisierung und dritter Downlink-Daten zu der mobilen Vorrichtung in einem dritten TTI durch Verwenden des ersten HARQ-Prozesses Folgendes umfasst:
wenn die erste Basisstation in dem dritten TTI bestimmt, dass kein verfügbarer HARQ-Prozess vorhanden ist, Senden durch die erste Basisstation der dritten Downlink-Autorisierung und der dritten Downlink-Daten zu der mobilen Vorrichtung in dem dritten TTI durch Verwenden eines virtuellen HARQ-Prozesses, wobei der virtuelle HARQ-Prozess dem ersten HARQ-Prozess entspricht.

4. Verfahren nach einem der Ansprüche 1 bis 2, wobei nach dem Erhalten durch die erste Basisstation in einem vierten TTI eines zweiten Rückmeldungsergebnisses, das von einer zweiten Basisstation gesendet wird und das den zweiten Downlink-Daten entspricht, das Verfahren ferner Folgendes umfasst:
Senden durch die erste Basisstation in dem vierten TTI durch Verwenden des zweiten HARQ-Prozesses der vierten Downlink-Autorisierung und fünfter Downlink-Daten zu der mobilen Vorrichtung gemäß Rückmeldungs(ACK)-informationen, die in dem zweiten Rückmeldungsergebnis enthalten sind, wobei die fünften Downlink-Daten den zweiten NDI in einem vierten Zustand übermitteln und der vierte Zustand durch Umkehren des zweiten Zustands des zweiten NDI erhalten wird.

5. Basisstation (500), wobei die Basisstation insbesondere eine erste Basisstation ist und die erste Basisstation Folgendes aufweist:
a) ein erstes Datenverarbeitungsmodul (501), das konfiguriert ist, um eine erste Downlink-Autorisierung und erste Downlink-Daten zu einer mobilen Vorrichtung in einem ersten Übertragungszeitintervall, TTI, durch Verwenden eines ersten hybriden automatischen Wiederholungsanforderungs(HARQ)-prozesses zu senden, wobei die ersten Downlink-Daten einen ersten Neudatenindikator, NDI, in einem ersten Zustand übermitteln;
b) ein zweites Datenverarbeitungsmodul (502), das konfiguriert ist, um eine zweite Downlink-Autorisierung und zweite Downlink-Daten zu der mobilen Vorrichtung in einem zweiten TTI unter Verwendung eines zweiten HARQ-Prozesses zu senden, wobei die zweiten Downlink-Daten einen zweiten NDI in einem zweiten Zustand übermitteln;
c) ein drittes Datenverarbeitungsmodul (503), das konfiguriert ist, um eine dritte Downlink-Autorisierung und dritte Downlink-Daten zu der mobilen Vorrichtung in einem dritten TTI durch Verwenden des ersten HARQ-Prozesses zu senden, wobei die dritten Downlink-Daten den ersten NDI in einem dritten Zustand übermitteln und der dritte Zustand durch Umkehren des ersten Zustands des ersten NDI erhalten wird; und
d) ein viertes Datenverarbeitungsmodul (504), das konfiguriert ist, um: in einem vierten TTI ein zweites Rückmeldungsergebnis zu erhalten, das von einer zweiten Basisstation gesendet wird und das den zweiten Downlink-Daten entspricht, und in dem vierten TTI durch Verwenden des zweiten HARQ-Prozesses eine vierte Downlink-Autorisierung und die weitergeleiteten zweiten Downlink-Daten zu der mobilen Vorrichtung gemäß negativen Rückmeldungs(NACK)-informationen, die in dem zweiten Rückmeldungsergebnis enthalten sind, zu senden,
e) wobei die weitergeleiteten zweiten Downlink-Daten den zweiten NDI in dem zweiten Zustand übermitteln und eine Zwischenstationsübertragungsverzögerung zwischen der zweiten Basisstation und der ersten Basisstation vorliegt; und
f) ein fünftes Datenverarbeitungsmodul (505), das konfiguriert ist, um: in einem fünften TTI ein erstes Rückmeldungsergebnis zu erhalten, das von der zweiten Basisstation gesendet wird und das den ersten Downlink-Daten entspricht, und in dem fünften TTI durch Verwenden des ersten HARQ-Prozesses eine fünfte Downlink-Autorisierung und die weitergeleiteten ersten Downlink-Daten zu der mobilen Vorrichtung gemäß NACK-Informationen, die in dem ersten Rückmeldungsergebnis enthalten sind, zu senden, wobei die weitergeleiteten ersten Downlink-Daten den ersten NDI in dem ersten Zustand übermitteln, der erste Zustand durch Umkehren des dritten Zustands des ersten NDI erhalten wird und eine Zeitdifferenz zwischen dem vierten TTI und dem zweiten TTI einer Zeitdifferenz zwischen dem fünften TTI und dem ersten TTI entspricht; und
g) wobei die vollständige Planung dadurch erreicht wird, dass die erste Basisstation angepasst ist, um den ersten HARQ-Prozess zu verwenden, um dritte Downlink-Daten zu der mobilen Station in dem dritten TTI zu senden
- nachdem die ersten Daten in dem ersten TTI gesendet werden und bevor das erste Rückmeldungsergebnis in dem fünften TTI erhalten wird und
- nachdem die zweiten Daten in dem zweiten TTI gesendet werden und bevor das zweite Rückmeldungsergebnis in dem vierten TTI erhalten wird.

6. Basisstation nach Anspruch 5, wobei die erste Basisstation ferner Folgendes aufweist:
ein sechstes Datenverarbeitungsmodul (506), das konfiguriert ist, um: nachdem das dritte Datenverarbeitungsmodul die dritte Downlink-Autorisierung und die dritten Downlink-Daten zu der mobilen Vorrichtung in dem dritten TTI durch Verwenden des ersten HARQ-Prozesses sendet, eine sechste Downlink-Autorisierung und vierte Downlink-Daten zu der mobilen Vorrichtung in einem sechsten TTI durch Verwenden des ersten HARQ-Prozesses zu senden, wobei die vierten Downlink-Daten den ersten NDI in dem ersten Zustand übermitteln und der erste Zustand durch Umkehren des dritten Zustands des ersten NDI erhalten wird.

7. Basisstation nach einem der Ansprüche 5 bis 6, wobei das dritte Datenverarbeitungsmodul insbesondere konfiguriert ist, um: wenn die erste Basisstation in dem dritten TTI bestimmt, dass kein verfügbarer HARQ-Prozess vorhanden ist, die dritte Downlink-Autorisierung und die dritten Downlink-Daten zu der mobilen Vorrichtung in dem dritten TTI durch Verwenden eines virtuellen HARQ-Prozesses zu senden, wobei der virtuelle HARQ-Prozess dem ersten HARQ-Prozess entspricht.

8. Basisstation nach einem der Ansprüche 5 bis 7, wobei nach dem Erhalten in dem vierten TTI des zweiten Rückmeldungsergebnisses, das von der zweiten Basisstation gesendet wird und das den zweiten Downlink-Daten entspricht, das vierte Datenverarbeitungsmodul ferner konfiguriert ist, um in dem vierten TTI durch Verwenden des zweiten HARQ-Prozesses die vierte Downlink-Autorisierung und fünfte Downlink-Daten zu der mobilen Vorrichtung gemäß Rückmeldungs(ACK)-informationen, die in dem zweiten Rückmeldungsergebnis enthalten sind, zu senden, wobei die fünften Downlink-Daten den zweiten NDI in einem vierten Zustand übermitteln und der vierte Zustand durch Umkehren des zweiten Zustands des zweiten NDI erhalten wird.

## Revendications

1. Procédé de planification de données, comprenant :
a) l'envoi (201) par une première station de base, d'une première autorisation de liaison descendante et de premières données de liaison descendante à un dispositif mobile dans un premier intervalle de temps de transmission, TTI, au moyen d'un premier processus de requête de répétition automatique hybride, HARQ, les premières données de liaison descendante portant un premier indicateur de nouvelles données, NDI, dans un premier état ;
b) l'envoi (202), par la première station de base, d'une deuxième autorisation de liaison descendante et de deuxièmes données de liaison descendante au dispositif mobile dans un deuxième TTI au moyen d'un deuxième processus HARQ, les deuxièmes données de liaison descendante portant un deuxième NDI dans un deuxième état ;
c) l'envoi (203), par la première station de base, d'une troisième autorisation de liaison descendante et de troisièmes données de liaison descendante au dispositif mobile dans un troisième TTI au moyen du premier processus HARQ, les troisièmes données de liaison descendante portant le premier NDI dans un troisième état, et le troisième état étant obtenu en inversant le premier état du premier NDI ; et
d) la réception (204), par la première station de base dans un quatrième TTI, d'un deuxième résultat de retour qui est envoyé par une deuxième station de base et qui correspond aux deuxièmes données de liaison descendante, et l'envoi, par la première station de base dans le quatrième TTI au moyen du deuxième processus HARQ, d'une quatrième autorisation de liaison descendante et des deuxièmes données de liaison descendante retransmises au dispositif mobile en fonction d'informations d'accusé de réception négatif NACK comprises dans le deuxième résultat de retour,
e) dans lequel les deuxièmes données de liaison descendante retransmises portent le deuxième NDI dans le deuxième état, et il existe un délai de transmission interstation entre la deuxième station de base et la première station de base ;
f) la réception, par la première station de base dans un cinquième TTI, d'un premier résultat de retour qui est envoyé par la deuxième station de base et qui correspond aux premières données de liaison descendante, et l'envoi, par la première station de base dans le cinquième TTI au moyen du premier processus HARQ, d'une cinquième autorisation de liaison descendante et des premières données de liaison descendante retransmises au dispositif mobile en fonction d'informations NACK comprises dans le premier résultat de retour, les premières données de liaison descendante retransmises portant le premier NDI dans le premier état, le premier état étant obtenu en inversant le troisième état du premier NDI, et une différence de temps entre le quatrième TTI et le deuxième TTI étant égale à une différence de temps entre le cinquième TTI et le premier TTI ; et
g) dans lequel une planification complète est obtenue en utilisant le premier processus HARQ pour envoyer des troisièmes données de liaison descendante à la station mobile dans le troisième TTI
- après l'envoi des premières données dans le premier TTI et avant la réception du premier résultat de retour dans le cinquième TTI et
- après l'envoi des deuxièmes données dans le deuxième TTI et avant la réception du deuxième résultat de retour dans le quatrième TTI.

2. Procédé selon la revendication 1, le procédé comprenant en outre, après l'envoi, par la première station de base, d'une troisième autorisation de liaison descendante et de troisièmes données de liaison descendante au dispositif mobile dans un troisième TTI au moyen du premier processus HARQ :
l'envoi, par la première station de base, d'une sixième autorisation de liaison descendante et de quatrièmes données de liaison descendante au dispositif mobile dans un sixième TTI au moyen du premier processus HARQ, les quatrièmes données de liaison descendante portant le premier NDI dans le premier état, et le premier état étant obtenu en inversant le troisième état du premier NDI.

3. Procédé selon l'une quelconque des revendications 1 à 2, dans lequel l'envoi, par la première station de base, d'une troisième autorisation de liaison descendante et de troisièmes données de liaison descendante au dispositif mobile dans un troisième TTI au moyen du premier processus HARQ comprend :
si la première station de base détermine, dans le troisième TTI, qu'il n'y a aucun processus HARQ disponible, l'envoi, par la première station de base, de la troisième autorisation de liaison descendante et des troisièmes données de liaison descendante au dispositif mobile dans le troisième TTI au moyen d'un processus HARQ virtuel, le processus HARQ virtuel correspondant au premier processus HARQ.

4. Procédé selon l'une quelconque des revendications 1 à 2, le procédé comprenant en outre, après la réception, par la première station de base dans un quatrième TTI, d'un deuxième résultat de retour qui est envoyé par une deuxième station de base et qui correspond aux deuxièmes données de liaison descendante :
l'envoi, par la première station de base dans le quatrième TTI au moyen du deuxième processus HARQ, de la quatrième autorisation de liaison descendante et de cinquièmes données de liaison descendante au dispositif mobile en fonction d'informations d'accusé de réception ACK comprises dans le deuxième résultat de retour, les cinquièmes données de liaison descendante portant le deuxième NDI dans un quatrième état, et le quatrième état étant obtenu en inversant le deuxième état du deuxième NDI.

5. Station de base (500), la station de base étant spécifiquement une première station de base, et la première station de base comprenant :
a) un premier module de traitement de données (501), configuré pour envoyer une première autorisation de liaison descendante et des premières données de liaison descendante à un dispositif mobile dans un premier intervalle de temps de transmission, TTI, en utilisant un premier processus de requête de répétition automatique hybride, HARQ, les premières données de liaison descendante portant un premier indicateur de nouvelles données, NDI, dans un premier état ;
b) un deuxième module de traitement de données (502), configuré pour envoyer une deuxième autorisation de liaison descendante et des deuxièmes données de liaison descendante au dispositif mobile dans un deuxième TTI en utilisant un deuxième processus HARQ, les deuxièmes données de liaison descendante portant un deuxième NDI dans un deuxième état ;
c) un troisième module de traitement de données (503), configuré pour envoyer une troisième autorisation de liaison descendante et des troisièmes données de liaison descendante au dispositif mobile dans un troisième TTI en utilisant le premier processus HARQ, les troisièmes données de liaison descendante portant le premier NDI dans un troisième état, et le troisième état étant obtenu en inversant le premier état du premier NDI ; et
d) un quatrième module de traitement de données (504), configuré pour : recevoir, dans un quatrième TTI, un deuxième résultat de retour qui est envoyé par une deuxième station de base et qui correspond aux deuxièmes données de liaison descendante, et envoyer, dans le quatrième TTI en utilisant le deuxième processus HARQ, une quatrième autorisation de liaison descendante et les deuxièmes données de liaison descendante retransmises au dispositif mobile en fonction d'informations d'accusé de réception négatif NACK comprises dans le deuxième résultat de retour,
e) dans laquelle les deuxièmes données de liaison descendante retransmises portent le deuxième NDI dans le deuxième état, et il existe un délai de transmission interstation entre la deuxième station de base et la première station de base ; et
f) un cinquième module de traitement de données (505), configuré pour : recevoir, dans un cinquième TTI, un premier résultat de retour qui est envoyé par la deuxième station de base et qui correspond aux premières données de liaison descendante, et envoyer, dans le cinquième TTI en utilisant le premier processus HARQ, une cinquième autorisation de liaison descendante et les premières données de liaison descendante retransmises au dispositif mobile en fonction d'informations NACK comprises dans le premier résultat de retour, les premières données de liaison descendante retransmises portant le premier NDI dans le premier état, le premier état étant obtenu en inversant le troisième état du premier NDI, et une différence de temps entre le quatrième TTI et le deuxième TTI étant égale à une différence de temps entre le cinquième TTI et le premier TTI ; et
g) dans laquelle une planification complète est obtenue par la première station de base qui est adaptée pour utiliser le premier processus HARQ pour envoyer des troisièmes données de liaison descendante à la station mobile dans le troisième TTI
- après l'envoi des premières données dans le premier TTI et avant la réception du premier résultat de retour dans le cinquième TTI et
- après l'envoi des deuxièmes données dans le deuxième TTI et avant la réception du deuxième résultat de retour dans le quatrième TTI.

6. Station de base selon la revendication 5, la première station de base comprenant en outre :
un sixième module de traitement de données (506), configuré pour : après que le troisième module de traitement de données a envoyé la troisième autorisation de liaison descendante et les troisièmes données de liaison descendante au dispositif mobile dans le troisième TTI en utilisant le premier processus HARQ, envoyer une sixième autorisation de liaison descendante et des quatrièmes données de liaison descendante au dispositif mobile dans un sixième TTI en utilisant le premier processus HARQ, les quatrièmes données de liaison descendante portant le premier NDI dans le premier état, et le premier état étant obtenu en inversant le troisième état du premier NDI.

7. Station de base selon l'une quelconque des revendications 5 à 6, dans laquelle le troisième module de traitement de données est spécifiquement configuré pour : si la première station de base détermine, dans le troisième TTI, qu'il n'y a aucun processus HARQ disponible, envoyer la troisième autorisation de liaison descendante et les troisièmes données de liaison descendante au dispositif mobile dans le troisième TTI en utilisant un processus HARQ virtuel, le processus HARQ virtuel correspondant au premier processus HARQ.

8. Station de base selon l'une quelconque des revendications 5 à 7, dans laquelle, après la réception, dans le quatrième TTI, du deuxième résultat de retour qui est envoyé par la deuxième station de base et qui correspond aux deuxièmes données de liaison descendante, le quatrième module de traitement de données est également configuré pour envoyer, dans le quatrième TTI en utilisant le deuxième processus HARQ, la quatrième autorisation de liaison descendante et des cinquièmes données de liaison descendante au dispositif mobile en fonction d'informations d'accusé de réception ACK comprises dans le deuxième résultat de retour, les cinquièmes données de liaison descendante portant le deuxième NDI dans un quatrième état, et le quatrième état étant obtenu en inversant le deuxième état du deuxième NDI.
